(19) **Europäisches Patentamt / European Patent Office / Office européen des brevets**

(11) **EP 4 008 736 A1**

(12) **EUROPEAN PATENT APPLICATION**

(43) Date of publication:
**08.06.2022 Bulletin 2022/23**

(21) Application number: **20211473.2**

(22) Date of filing: **03.12.2020**

(51) International Patent Classification (IPC):
**C08G 18/00** $^{(2006.01)}$

(52) Cooperative Patent Classification (CPC):
**C08G 18/003; C08G 18/7671**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Covestro Deutschland AG**
**51373 Leverkusen (DE)**

(72) Inventors:
• **Movahhed, Sohajl**
**50674 Köln (DE)**

• **Westhues, Stefan**
**51379 Leverkusen (DE)**
• **Thiel, Daniel**
**51375 Leverkusen (DE)**
• **Laemmerhold, Kai**
**52078 Aachen (DE)**
• **Wolf, Aurel**
**42489 Wülfrath (DE)**
• **Guertler, Christoph**
**50735 Köln (DE)**

(74) Representative: **Levpat**
**c/o Covestro AG**
**Gebäude 4825**
**51365 Leverkusen (DE)**

(54) **METHOD FOR THE PRODUCTION OF THERMOPLASTIC POLYOXAZOLIDINONE POLYMERS**

(57)    A process for producing a thermoplastic polyoxazolidinone comprising copolymerizing a diisocyanate compound with a bisepoxide compound in the presence of a catalyst, in a solvent, wherein the solvent is characterized by a cohesive energy density $\delta^2$, the cohesive energy density $\delta^2$ being the sum of a component $\delta_D^2$, $\delta_D^2$ being characteristic of dispersion forces between molecules of the solvent, a component $\delta_P^2$, $\delta_P^2$ being characteristic of dipolar intermolecular forces between molecules of the solvent, and a component $\delta H^2$, $\delta H^2$ being characteristic of hydrogen bond forces between molecules of the solvent with: $\delta^2 = \delta_D^2 + \delta_P^2 + \delta_H^2$; wherein at 25 °C $\delta_D$ has a value of 18.0 MPa$^{0.5}$ to 20.0 MPa$^{0,5}$, $\delta_P$ has a value of 8.0 MPa$^{0,5}$ to 15.0 MPa$^{0,5}$, and $\delta_H$ has a value of 2.5 MPa$^{0,5}$ to 9.0 MPa$^{0,5}$. The invention is also related to the resulting thermoplastic polyoxazolidinone.

EP 4 008 736 A1

**Description**

A process for producing a thermoplastic polyoxazolidinone comprising copolymerizing a diisocyanate compound with a bisepoxide compound in the presence of a catalyst, in a solvent, wherein the solvent is characterized by a cohesive energy density $\delta^2$, the cohesive energy density $\delta^2$ being the sum of a component $\delta_D^2$, $\delta_D^2$ being characteristic of dispersion forces between molecules of the solvent, a component $\delta_P^2$, $\delta_P^2$ being characteristic of dipolar intermolecular forces between molecules of the solvent, and a component $\delta_H^2$, $\delta_H^2$ being characteristic of hydrogen bond forces between molecules of the solvent with: $\delta^2 = \delta_D^2 + \delta_P^2 + \delta_H^2$; wherein at 25 °C $\delta_D$ has a value of 18.0 MPa$^{0,5}$ to 20.0 MPa$^{0,5}$, $\delta_P$ has a value of 8.0 MPa$^{0,5}$ to 15.0 MPa$^{0,5}$, and $\delta_H$ has a value of 2.5 MPa$^{0,5}$ to 9.0 MPa$^{0,5}$. The invention is also related to the resulting thermoplastic polyoxazolidinone.

Oxazolidinones are widely used structural motifs in pharmaceutical applications and the cycloaddition of epoxides and isocyanates seems to be a convenient one-pot synthetic route to it. Expensive catalysts, reactive polar solvents, long reaction times and low chemoselectivities are common in early reports for the synthesis of oxazolidinones (M. E. Dyen and D. Swern, Chem. Rev., 67, 197, 1967). Due to these disadvantages there was the need for alternative methods for the production of oxazolidinones especially for application of oxazolidinones as structural motif in polymer applications.

WO 2019/052991 A1 and WO 2019/052994 A1 disclose processes for producing thermoplastic polyoxazolidinone comprising copolymerization of a diisocyanate compound with a bisepoxide compound and a monofunctional epoxide in the presence of Lithium chloride and Lithium bromide as catalysts in N-Methylpyrrolidone and sulfolane as high boiling co-solvents.

WO 2020/016276 A1 disclose a process for the production of a polyoxazolidinone by bulk polymerisation of a diisocyanate and a bisepoxide using an ionic liquid as a catalyst in the absence of a solvent, wherein the reaction temperature is increased during the addition of the diisocyanate. The use of a monofunctional epoxide in addition to the bisepoxide is not disclosed.

In the non-published patent application EP 20165326 disclose a two-step process for producing thermoplastic polyoxazolidinones and resulting products thereof, comprising copolymerization of a diisocyanate compound with a bisepoxide compound in the presence of a LiCl-based catalyst and a monofunctional epoxide as a chain regulator in a mixture of trichlorobenzene an sulfolane as solvents, wherein the bisepoxide compound comprises 2,4'-isopropylidenediphenol diglycidyl ether (2,4' BADGE) and 4,4'-isopropylidenediphenol diglycidyl ether (4,4' BADGE); and wherein the molar ratio of 2,4'-isopropylidenediphenol diglycidyl ether (2,4' BADGE) is from ≥3 mol-% to ≤11 mol. The formed thermoplastic polyoxazolidinone intermediate is further reacted with a monofunctional epoxide forming the thermoplastic polyoxazolidinone product.

In the non-published patent applications EP 20192497, EP 20192499, and EP 20192501 disclose two-step processes for producing a thermoplastic polyoxazolidinone and resulting products thereof comprising copolymerizing diisocyanate compounds with different bisepoxide compounds in the presence of phosphonium-salt based catalysts, and monofunctional epoxides as chain regulators in ortho-dichlorobenzene or 1,2,4-trichlorobenzene as solvents and the absence of high boiling solvents with a boiling point higher than 200 °C at 1 bar (absolute). Within this two-step processes first a thermoplastic polyoxazolidinone intermediate formed that is subsequently further reacted with a monofunctional epoxide forming the thermoplastic polyoxazolidinone product.

Objective of the present invention was therefore to identify an optimized and simple preferably one-step process for the preparation of thermoplastic polyoxazolidinones with an improved or at least comparable thermal stability and a lower or at least comparable polydispersity than the already known thermoplastic polyoxazolidinones by the polyaddition route. In particular, suitable process conditions should be developed to obtain a polyoxazolidinone product with a high chemical selectivity and reducing the amount of unwanted side products like isocyanurates that causes unwanted crosslinking of the reaction product and negatively impact the thermoplastic properties without adding a chain regulator e.g. monofunctional epoxide and/or carry out multiple reaction steps e.g. by adding the chain regulator in a second step. Thus, the process efficiency can be increased by reducing the reaction time and/or reducing or avoiding additional reactants e.g. monofunctional chain-regulators or solvents without reducing the quality of the resulting thermoplastic polyoxazolidinones.

Thus, a high oxazolidinone to isocyanurate ratio of the resulting thermoplastic polyoxazolidinone product is desirable that is comparable or improved compared to the systems disclosed in the prior art to gain good thermoplastic properties for the subsequent shaping processes in combination with a simplified, preferably one-step preparation process. In addition, also the increase of the oxazolidinone to isocyanurate ratio and a lower polydispersity of the resulting polyoxazolidinones compared to the prior art is of particular interest for the present invention.

Surprisingly, it has been found that the problem can be solved by a process for producing a thermoplastic polyoxazolidinone (1) comprising copolymerizing a diisocyanate compound (A) with a bisepoxide compound (B) in the presence of a catalyst (C) in a solvent (E), wherein the solvent (E) is characterized by a cohesive energy density $\delta^2$, the cohesive energy density $\delta^2$ being the sum of a component $\delta_D^2$, $\delta_D^2$ being characteristic of dispersion forces between molecules of the solvent (E), a component $\delta_P^2$, $\delta_P^2$ being characteristic of dipolar intermolecular forces between molecules of the solvent (E), and

a component $\delta_H{}^2$, $\delta_H{}^2$ being characteristic of hydrogen bond forces between molecules of the solvent (E), with:

$$\delta^2 = \delta_D{}^2 + \delta_P{}^2 + \delta_H{}^2;$$

wherein at 25 °C:

$\delta_D$ has a value of 18.0 MPa$^{0,5}$ to 20.0 MPa$^{0,5}$,

$\delta_P$ has a value of 8.0 MPa$^{0,5}$ to 15.0 MPa$^{0,5}$, and

$\delta_H$ has a value of 2.5 MPa$^{0,5}$ to 9.0 MPa$^{0,5}$.

As used herein, the term "thermoplastic polyoxazolidinone" is meant to denote compounds containing at least two oxazolidinone groups in the molecule. The thermoplastic polyoxazolidinone are obtainable by the reaction of a diisocyanate compound with a bisepoxide compound.

The Hansen parameter are physio chemical properties used to define the compatibility between materials, e.g. solvents such as the solvent (E) and can be described by three Hansen parameters, each generally measured in MPa$^{0.5}$, wherein these parameters are

$\delta_D$     as the energy from dispersion forces between molecules within

$\delta_P$     as the energy from dipolar intermolecular force between molecules

$\delta_H$     The energy from hydrogen bonds between molecules.

Hansen solubility parameters were developed by Charles M. Hansen in his PhD thesis 1967 (Hansen, Charles (1967). The Three Dimensional Solubility Parameter and Solvent Diffusion Coefficient and Their Importance in Surface Coating Formulation. Copenhagen: Danish Technical Press) and is a technical and scientifically widely accepted concept for prediction if one material (molecule) will dissolve in another and form a solution (Hansen, Charles (2007). Hansen Solubility Parameters: A user's handbook, Second Edition. Boca Raton, Fla: CRC Press). A summary of Hansen solubility parameters for different liquids at 25 °C can be found in Table 16.3 of Zeng et al. (Zeng W., Du Y., Xue Y., Frisch H.L. (2007) Solubility Parameters. In: Mark J.E. (eds) Physical Properties of Polymers Handbook. Springer, New York, NY), wherein the Hansen solubility parameters of *ortho*-dichlorobenzene (o-DCB) are $\delta_D$: 19.2 MPa$^{0.5}$, $\delta_P$: 6.3 MPa$^{0.5}$, $\delta_H$: 3.3 MPa$^{0.5}$ and of benzonitrile are ($\delta_D$: 18.8 MPa$^{0.5}$, $\delta_P$: 12.0 MPa$^{0.5}$, $\delta_H$: 3.3 MPa$^{0.5}$) at 25 °C. The Hansen solubility parameters for sulfolane at 25 °C are $\delta_D$: 20.3 MPa$^{0.5}$, $\delta_P$: 18.2 MPa$^{0.5}$, $\delta_H$: 10.9 MPa$^{0.5}$ at 25 °C (Hansen, C. Hansen Solubility Parameters: A User's Handbook, 2nd ed.; CRC Press: Boca Raton, FL, USA, 2012).

In an embodiment of the method according to the invention the copolymerization comprises:

(i) placing the solvent (E) and the catalyst (C) in a reactor to provide a mixture (i),

(ii) placing the diisocyanate compound (A), the bisepoxide compound (B) and optionally the compound (D) in a second vessel to provide a mixture (ii), and

(iii) adding the mixture (ii) to the mixture (i).

In a preferred embodiment of the method according to the invention the compound (D) is added in step (ii). The compound (D) acts as a chain regulator for the thermoplastic polyoxazolidinone and lowers the polydispersity of the thermoplastic polyoxazolidinone (1).

In an embodiment of the invention the mixture (ii) of step (ii) is added in step (iii) in a continuous manner to the mixture (i) of step (i).

In an alternative embodiment of the invention the mixture (ii) of step (ii) is added in step (iii) in a stepwise manner to the mixture (i) of step (i).

As used herein, the term "diisocyanate compound (A)" is meant to denote diisocyanate compounds having two isocyanate groups (I = 2), isocyanate-terminated biurets, isocyanurates, uretdiones, carbamates and / or isocyanate-terminated prepolymers.

In an embodiment of the method according to the invention the diisocyanate compound (A) is at least one compound selected from the group consisting of tetramethylene diisocyanate, hexamethylene diisocyanate (HDI), 2-methylpentamethylene diisocyanate, 2,2,4-trimethyl-hexamethylene diisocyanate (THDI), dodecanemethylene diisocyanate, 1,4-diisocyanatocyclohexane, 3-isocyanatomethyl-3,3,5-trimethylcyclohexyl isocyanate (isophorone diisocyanate, IPDI), diisocyanatodicyclohexylmethane (H12-MDI), diphenylmethane diisocyanate (MDI), 4,4'-diisocyanato-3,3'-dimethyldicyclohexylmethane, 4,4'-diisocyanato-2,2-dicyclohexyl propane, poly(hexamethylene diisocyanate), octamethylene diisocyanate, tolylene-α,4-diisocyanate, poly(propylene glycol) tolylene-2,4-diisocyanate terminated, poly(ethylene adipate) tolylene-2,4-diisocyanate terminated, 2,4,6-trimethyl-1,3-phenylene diisocyanate, 4-chloro-6-methyl-1,3-phenylene diisocyanate, poly[1,4-phenylene diisocyanate-co-poly(1,4-butanediol)]diisocyanate, poly(tetrafluoroethylene oxide-co-difluoromethylene oxide) α,ω-diisocyanate, 1,4-diisocyanatobutane, 1,8-diisocyanatooctane, 1,3-bis(1-isocyanato-1-methylethyl)benzene, 3,3'-dimethyl-4,4'-biphenylene diisocyanate, naphthalene-1,5-diisocyanate, 1,3-phenylene diisocyanate, 1,4-diisocyanatobenzene, 2,4- or 2,5- and 2,6-diisocyanatotoluene (TDI) or mixtures of these isomers, 4,4'-, 2,4'- or 2,2'-diisocyanatodiphenylmethane or mixtures of these isomers, 4,4'-, 2,4'- or 2,2'-diisocyanato-2,2-diphenylpropane-p-xylene diisocyanate and α,α,α',α'-tetramethyl- m- or -p-xylene diisocyanate (TMXDI) and biurets, isocyanurates, carbamates and uretdiones of the aforementioned isocyanates.

More preferred the diisocyanate compound (A) is selected from the group comprising of tolylene-α,4-diisocyanate, poly(propylene glycol) tolylene-2,4-diisocyanate terminated, 2,4,6-trimethyl-1,3-phenylene diisocyanate, 4-chloro-6-methyl-1,3-phenylene diisocyanate, 3,3'-dimethyl-4,4'-biphenylene diisocyanate, 4,4'-, 2,4'- or 2,2'-diisocyanatodiphenylmethane or mixtures of these isomers, 4,4'-, 2,4'- or 2,2'-diisocyanato-2,2-diphenylpropane-p-xylene diisocyanate and α,α,α',α'-tetramethyl- m- or -p-xylene diisocyanate (TMXDI), diphenylmethane diisocyanate (MDI), naphthalene-1,5-diisocyanate, 1,3-phenylene diisocyanate, 1,4-diisocyanatobenzene, 2,4- or 2,5- and 2,6-diisocyanatotoluene (TDI) or mixtures of these isomers.

And most preferred the diisocyanate compound (A) is selected from the group consisting of diphenylmethane diisocyanate (MDI), naphthalene-1,5-diisocyanate, 1,3-phenylene diisocyanate, 1,4-diisocyanatobenzene, 2,4- or 2,5- and 2,6-diisocyanatotoluene (TDI) or mixtures of these isomers.

A mixture of two or more of the aforementioned diisocyanate compounds (A) can also be used.

As used herein, the term "bisepoxide compound (B)" is meant to denote diepoxide compounds having two epoxide groups (F = 2).

In a preferred embodiment of the invention the bisepoxide compound (B) is at least one compound selected from the group consisting of resorcinol diglycidyl ether, neopentyl glycol diglycidyl ether, 1,6-hexanediol diglycidyl ether, 1,4-butandiol diglycidyl ether, hydrogenated bisphenol-A diglycidyl ether, bisphenol-A diglycidyl ether, bisphenol-F diglycidyl ether, bisphenol-S diglycidyl ether, 9,9-bis(4-glycidyloxy phenyl)fluorine, tetrabromo bisphenol-A diglycidyl ether, tetrachloro bisphenol-A diglycidyl ether, tetramethyl bisphenol-A diglycidyl ether, tetramethyl bisphenol-F diglycidyl ether, tetramethyl bisphenol-S diglycidyl ether, diglycidyl terephthalate, diglycidyl o-phthalate, 1,4-cyclohexane dicarboxylic acid diglycidyl ester, ethylene glycol diglycidyl ether, polyethylene glycol diglycidyl ether, diethylene glycol diglycidyl ether, propylene glycol diglycidyl ether, dipropylene glycol diglycidyl ether, polypropylene glycol diglycidyl ether, polybutadiene diglycidyl ether, butadiene diepoxide, vinylcyclohexene diepoxide, limonene diepoxide, the diepoxides of double unsaturated fatty acid C1 - C18 alkyl esters, 2-dihydroxybenzene diglycidyl ether, 1,4-dihydroxybenzene diglycidyl ether, 4,4'-(3,3,5-trimethylcyclohexyliden)bisphenyl diglycidyl ether and diglycidyl isophthalate.

More preferred the bisepoxide compound (B) is selected from the group consisting of resorcinol diglycidyl ether, bisphenol A diglycidyl ether, and bisphenol F diglycidyl ether.

Most preferred the bisepoxide compound (B) is selected from the group consisting of bisphenol A diglycidyl ether, and bisphenol F diglycidyl ether.

A mixture of two or more of the aforementioned bisepoxide compounds (B), two or more of the aforementioned epoxy-terminated oxazolidone-based prepolymer can also be used. Also a mixture of the aforementioned bisepoxide compounds (B) and the epoxy-terminated oxazolidone-based prepolymer can also be used.

The molecular weight of the obtained thermoplastic polyoxazolidinone is determined by the molar ratio of the bisepoxide compound (B) relative to diisocyanate compound (A) and optionally relative to the compound (D).

In an embodiment of the invention the catalyst (C) comprises at least one of a tetraalkylphosphonium halogenide, a tetracycloalkylphosphonium halogenide, a tetraarylphosphonium halogenide, a tetraalkylammonium halogenide, a tetracycloalkylammonium halogenide, and/or a tetraarylammonium halogenide, preferred a tetraalkylphosphonium halogenide, a tetracycloalkylphosphonium halogenide, and a tetraarylphosphonium halogenide.

In a preferred embodiment of the invention the catalyst (C) is at least one compound selected from the group consisting of tetramethylammonium bromide, tetraethylammonium bromide, tetrapropylammonium bromide, tetrabutylammonium bromide, tetrapentylammonium bromide, , tetrahexylammonium bromide, , tetraheptylammonium bromide, , tetraoctylammonium bromide, tetramethylammonium chloride, tetraethylammonium chloride, tetrapropylammonium chloride, tetrabutylammonium chloride, tetrapentylammonium chloride, , tetrahexylammonium chloride, , tetraheptylammonium chloride, tetraoctylammonium chloride, tetraphenylphosphonium chloride, tetraphenylphosphonium bromide, tetraphenylphosphonium iodide, bis(triphenylphosphine)iminium chloride, tetraphenylphosphonium nitrate, ,tetraphenylphosphonium carbonate and compounds represented by the formula (I)

$$[A]_n^+[Y]^{n-} \qquad (I)$$

wherein $[A]_n^+$ is at least one compound selected from the group consisting of *p*-phenoltriphenyl-phosphonium; p-phenoltriphenyl-ammonium; *p*-chlorobenzene triphenyl-phosphonium; ethylammonium; methyltrioctyl-ammonium; cholin; 1-allyl-3-methyl-imidazolium; 1-butyl-2,3-dimethyl- imidazolium; 1-butyl-3-methyl-imidazolium; 1,2-dimethyl-3-propyl-imidazolium; 1,3-dimethyl- imidazolium; 1-ethyl-3-methyl-imidazolium; 1-hexadecyl-3-methyl-imidazolium; 1-hexyl-3-methyl- imidazolium; 1-methyl-3-octyl-imidazolium; 1-methyl-3-propyl-imidazolium; trihexyltetradecyl- phosphonium; 1-methyl-1-propyl piperidinium; 1-butyl-pyridinium; 1-butyl-3-methyl-pyridinium; 1-butyl-4-methyl-pyridinium; 1-butyl-1-methyl-pyrrolidinium; 1-methyl-1-propyl- pyrrolidinium; triethyl-sulfonium

wherein $[Y]^{n-}$ is at least one compound selected from the group consisting of bis(trifluoromethylsulfonyl)imide; iodide; bromide; chloride; dicyanamide; diethyl phosphate; dihydrogen phosphate; dimethyl phosphate; ethyl sulfate; hexafluorophosphate; hydrogensulfate; nitrate; tetrafluoroborate; thiocyanate; triflate.

In a more preferred embodiment of the invention the catalyst (C) is at least one compound selected from the group consisting of tetramethylammonium bromide, tetraethylammonium bromide, tetrapropylammonium bromide, tetrabutylammonium bromide, tetrapentylammonium bromide, , tetrahexylammonium bromide, , tetraheptylammonium bromide, , tetraoctylammonium bromide, tetramethylammonium chloride, tetraethylammonium chloride, tetrapropylammonium chloride, tetrabutylammonium chloride, tetrapentylammonium chloride, , tetrahexylammonium chloride, , tetraheptylammonium chloride, tetraoctylammonium chloride, tetraphenylphosphonium chloride, tetraphenylphosphonium bromide, tetraphenylphosphonium iodide, bis(triphenylphosphine)iminium chloride, tetraphenylphosphonium nitrate, ,tetraphenylphosphonium carbonate.

In an even more preferred embodiment of the invention the catalyst (C) is at least one compound selected from the group consisting of tetraphenylphosphonium chloride, tetraphenylphosphonium bromide, tetraphenylphosphonium iodide, bis(triphenylphosphine)iminium chloride, tetraphenylphosphonium nitrate, and tetraphenylphosphonium carbonate.

In a most preferred embodiment of the invention the catalyst (C) is at least one compound selected from the group consisting of tetraphenylphosphonium chloride, tetraphenylphosphonium bromide and tetraphenylphosphonium iodide.

In one embodiment of the method according to the invention, the catalyst (C) is present in an amount of $\geq 0.001$ to $\leq 5.0$ weight-%, preferably in an amount of $\geq 0.005$ to $\leq 3.0$ weight-%, more preferred $\geq 0.08$ to $\leq 2.0$ weight-%, based on the theoretical yield of the thermoplastic polyoxazolidinone (1).

In an embodiment of the invention the compound (D) is added before the copolymerisation and the compound (D) is added before the copolymerisation, wherein the compound (D) comprises at least one of a monofunctional isocyanate, a monofunctional epoxide, a cyclic carbonate, a monofunctional alcohol, and a monofunctional amine, preferably a monofunctional epoxide, wherein the compound (D) acts as a chain regulator for the thermoplastic polyoxazolidinone and leads to a lower polydispersity of the thermoplastic polyoxazolidinone (1).

In a further embodiment of the invention the compound (D) is a branched, an unbranched aliphatic, an alicyclic and/or an aromatic monofunctional alcohol.

Suitable monofunctional alcohols are for example linear primary alcohols such as methanol, ethanol, propanol, n-butanol, n-pentanol, n-hexanol, n-heptanol, n-octanol, n-nonanol, n-decanol, n-dodecanol, n- tetradecanol, n-hexadecanol, n-octadecanol and n-eicosanol. Suitable branched primary monofunctional alcohols are for example isobutanol, isopentanol, isohexanol, isooctanol, isostearyl alcohol and iso-palmityl alcohol, 2-ethylhexyl alcohol, 3-n-propyl heptyl alcohol, 2-n-propyl heptyl alcohol, and 3- isopropyl heptyl alcohol. Suitable secondary monofunctional alcohols are for example isopropanol, sec-butanol, sec-pentanol (pentane- 2-ol), pentane-3-ol, cyclopentanol, cyclohexanol, sec-hexanol (hexane- 2-ol), hexane-3-ol, sec- heptanol (heptane-2-ol), heptane-3-ol, sec-decanol and decan-3-ol.Examples of suitable tertiary monofunctional alcohols are tert-butanol and tert-amyl alcohol.

Aromatic monofunctional alcohols such as phenol, cresol, thymol, benzyl alcohol and 2-phenylethanol can also be used.

In a further embodiment of the invention the compound (D) is a branched, an unbranched aliphatic, a alicyclic and/or an aromatic monofunctional isocyanate.

Suitable monofunctional isocyanates are for example n-hexylisocyanate, cyclohexyl isocyanate, ω-chlorohexamethylene isocyanate, 2-ethyl hexyl isocyanate, n-octyl isocyanate, dodecyl isocyanate, stearyl isocyanate, methyl isocyanate, ethyl isocyanate, butyl isocyanate, isopropyl isocyanate, octadecyl isocyanate, 6-chloro-hexyl isocyanate, cyclohexyl isocyanate, 2,3,4-trimethylcyclohexyl isocyanate, 3,3,5-trimethylcyclohexyl isocyanate, 2-norbornyl methyl isocyanate, decyl isocyanate, dodecyl isocyanate, tetradecyl isocyanate, hexadecyl isocyanate, octadecyl isocyanate, 3-butoxypropyl isocyanate, 3 - (2-ethylhexyloxy)-propyl isocyanate, (trimethylsilyl)isocyanate, phenyl isocyanate, ortho-, meta-, para-tolyl isocyanate, chlorophenyl isocyanate (2,3,4-isomers), dichlorophenyl isocyanate, 4-nitrophenyl isocyanate, 3-trifluoromethylphenyl isocyanate, benzyl isocyanate, dimethylphenylisocyanate (technical mixture and individual isomers), 4-dodecylphenylisocyanat, 4-cyclohexyl-phenyl isocyanate, 4-pentyl-phenyl isocyanate, 4-t-butyl phenyl isocyanate, 1-naphthyl isocyanat

In an embodiment of the invention the compound (D) is a branched, anunbranched aliphatic, an alicyclic and/or an aromatic monofunctional amine. Specific examples of the aliphatic monofunctional amine include hexylamine, heptylamine, octylamine, nonylamine, decylamine, undecylamine, dodecylamine, tridecylamine, tetradecylamine, pentadecylamine, hexadecylamine, heptadecyl. Examples include amine, octadecylamine, nonadecylamine, icosylamine, henecosylamine, docosylamin. Specific examples of the alicyclic monofunctional amine include cyclohexylamine, 2-methylcyclohexylamine, 3-methylcyclohexylamine, 4-methylcyclohexylamine, 2,3-dimethylcyclohexylamine, 2,4-dimethylcyclohexylamine, 2-ethylcyclohexylamine, 3-ethylcyclohexylamine, 4-ethylcyclohexylamine, 2-n-propylcyclohexylamine, 3-n-propylcyclohexylamine, 4-n-propylcyclohexylamine, 2-iso-propylcyclohexylamine, 3-iso-propylcyclohexylamine, 4-iso-propylcyclohexylamine, 2-n-butylcyclohexylamine, 3-n-butylcyclohexylamine, 4-n-butylcyclohexyl Silamine, 2-isobutylcyclohexylamine, 3-iso-butylcyclohexylamine, 4-iso-butylcyclohexylamine, 2-tert-butylcyclohexylamine, 3-tert-butylcyclohexylamine, 4-tert-butylcyclohexylamine, 2-n-octylcyclohexylamine, 3-n-octylcyclohexylamine, 4-n-octylcyclohexylamine, cyclohexylmethylamine, 2-methylcyclohexylmethylamine, 3-methylcyclohexylmethylamine, 4-methylcyclohexylmethylamine, dimethyl Cyclohexylmethylamine, trimethylcyclohexylmethylamine, methoxycyclohexylmethylamine, ethoxycyclohexylmethylamine, dimethyl Carboxymethyl cyclohexylmethyl amine, methoxy cyclohexylethylamine, dimethoxy cyclohexylethylamine, methylcyclohexylamine propylamine, dodecylamine cyclohexylamine.

Specific examples of the aromatic monofunctional amine include aniline, 1-naphthylamine, 2-naphthylamine, 1-aminoanthracene, o-toluidine, p-toluidine, m-toluidine, 2-ethylaniline, 3-ethylaniline, 4 -Ethylaniline, 2-propylaniline, 3-propylaniline, 4-propylaniline, cumidine, 2-n-butylaniline, 3-n-butylaniline, 4-n-butylaniline, 2-isobutylaniline, 3-isobutyl Aniline, 4-isobutylaniline, 2-sec-butylaniline, 3-sec-butylaniline, 4-sec-butylaniline, 2-tert-butylaniline, 3-tert-butylaniline, 4-tert-butylaniline, 2 -N-pentylaniline, 3-n-pentylaniline 4-n-pentylaniline, 2-isopentylaniline, 3-isopentylaniline, 4-isopentylaniline, 2-sec-pentylaniline, 3-sec-pentylaniline, 4-sec-pentylaniline, 2-tert -Pentylaniline, 3-tert-pentylaniline, 4-tert-pentylaniline, 2-hexylaniline, 3-hexylaniline, 4-hexylaniline, 2-heptylaniline, 3-heptylaniline, 4-heptylaniline, 2- Octylaniline, 3-octylaniline, 4-octylaniline, 2-nonylaniline, 3-nonylaniline, 4-nonylaniline, 2-decylaniline, 3-decylaniline, 4-decylaniline, cyclohexylaniline, diphenylamine, dimethylaniline , Diethylaniline, dipropylaniline, diisopropylaniline, di-n-butylaniline, di-sec-butylaniline, di-tert-butylaniline, trimethylaniline, triethylaniline, tripropylaniline, tri-tert-butylaniline, Anisidine, ethoxyaniline, dimethoxyaniline, diethoxyaniline, trimethoxyaniline, tri-n-butoxyaniline, benzylamine, methylbenzylamine, dimethylbenzylamine, trimethylbenzylamine, methoxybenzylamine, ethoxybenzylamine, dimethoxybenzylamine, $\alpha$-phenylethylamine, $\beta$-phenylethylamine, methoxyphenylethylamine, dimethoxyphenylethylamine, $\alpha$-phenylpropylamine, $\beta$ Phenylpropylamine, .gamma. phenylpropylamine, methyl phenylpropylamine.

In an embodiment of the invention the compound (D) is at least one compound selected from the group consisting of 4-phenyl-1,3-dioxolan-2-one (styrene carbonate), 1,3-dioxolan-2-one (ethylene carbonate), 4-Methyl-1,3-dioxolan-2-one (propylene carbonate).

In a preferred embodiment of the invention the compound (D) is at least one compound selected from the group consisting of phenyl glycidyl ether, o-cresyl glycidyl ether, m-cresyl glycidyl ether, p-cresyl glycidyl ether, 1-naphthyl glycidyl ether, 2-naphthyl glycidyl ether, 4-chlorophenyl glycidyl ether, 2,4,6-trichlorophenyl glycidyl ether, 2,4,6-tribromophenyl glycidyl ether, pentafluorophenyl glycidyl ether, cyclohexyl glycidyl ether, benzyl glycidyl ether, glycidyl benzoate, glycidyl acetate, glycidyl cyclohexylcarboxylate, methyl glycidyl ether, ethyl glycidyl ether, butyl glycidyl ether, hexyl glycidyl ether, 2-ethylhexyl glycidyl ether, octyl glycidyl ether, C10 - C18 alkyl glycidyl ether, allyl glycidyl ether, ethylene oxide, propylene oxide, styrene oxide, 1,2-butene oxide, 2,3-butene oxide, 1,2-hexene oxide, oxides of C10 - C18 alpha-olefines, cyclohexene oxide, vinylcyclohexene monoxide, limonene monoxide, butadiene monoepoxide, *N*-glycidyl phthalimide, and 4-tert-butylphenyl glycidyl ether.

In a preferred embodiment of the invention the compound (D) is 4-tert-butylphenyl glycidyl ether and/or phenyl glycidyl ether and/or o-cresyl glycidyl ether and/or styrene oxide.

In one embodiment of the method according to the invention, the compound (D) is present in an amount of $\geq$ 0.1 to $\leq$ 7.0 weight-%, preferably in an amount of $\geq$ 0.2 to $\leq$ 5.0 weight-%, more preferred $\geq$ 0.5 to $\leq$ 3.0 weight-%, based on the theoretical yield of thermoplastic polyoxazolidinone.

Preferably, the molar amount of a monofunctional isocyanate, a monofunctional epoxide, a cyclic carbonate, a monofunctional alcohol, a monofunctional amine preferred a monofunctional epoxide added as compound (D) fulfils certain criteria with respect to the molar amount of bisepoxide compound (B) and diisocyanate compound (A). The ratio r is defined as the absolute value of the molar amount of compound (D) ($n_D$) to the difference between the molar amount of bisepoxide compound (B) ($n_{bisepoxide}$) and the molar amount of diisocyanate compound (A) ($n_{diisocyanate}$) according to the following formula (II)

$$r = \left| n_D / (n_{bisepoxide} - n_{diisocyanate}) \right| \qquad \text{(II)}$$

is preferably in the range of $\geq$ 1.5 to $\leq$ 2.5, more preferably in the range of $\geq$ 1.9 to $\leq$ 2.1, and particularly preferred in the range of $\geq$ 1.95 to $\leq$ 2.05. Without being bound to a theory, all epoxide groups and all isocyanate groups will have reacted at the end of the reaction, when such an amount of chain regulator is being used.

The solvent (E) according to the invention dissolves the diisocyanate compound (A) the bisepoxide compound (B) and the thermoplastic polyoxazolidinone but do not react with the diisocyanate compound (A) the bisepoxide compound (B), the catalyst (C), compound (D) if present, compound (F) if present, the thermoplastic polyoxazolidinone (1) and the thermoplastic polyoxazolidinone (2).

In an embodiment of the method according to the invention the solvent (E) is one single solvent, that means that no mixture comprising at least two solvents is used.

In a preferred embodiment of the method according to the invention the solvent (E) comprises at least one of a substituted or unsubstituted alkyl nitrile, a substituted or unsubstituted alkenyl nitrile, a substituted or unsubstituted cycloalkyl nitrile, a substituted or unsubstituted aryl nitrile, a substituted or unsubstituted alkylcycloalkyl nitrile, a substituted or unsubstituted alkylaryl nitrile, a substituted or unsubstituted hetercycloalkyl nitrile, a substituted or unsubstituted heteroalkyl nitrile, and a substituted or unsubstituted heteroaryl nitrile, preferably a substituted or unsubstituted aryl nitrile.

In a more preferred embodiment of the method according to the invention the solvent (E) is one or more compound(s), preferably one compound, and is selected from the group consisting of benzonitrile, p-chlorobenzonitrile, p-bromobenzonitrile, p-tolunitrile, p-methoxybenzonitrile, p-tert. butylbenzonitrile, o-chlorobenzonitrile, o-bromobenzonitrile, o-tolunitrile, o-methoxybenzonitrile, m-chlorobenzonitrile, m-tolunitrile, m-methoxybenzonitrile 2,3-dichlorobenzonitrile, 2,4-dichlorobenzonitrile, 2,5-dichlorobenzonitrile, 2,6-dichlorobenzonitrile, 3,4-dichlorobenzonitrile, butyronitrile, isobutyronitrile, valeronitrile, cyclohexanecarbonitrile, caprinonitrile, and pivalonitrile, preferably benzonitrile.

In a most preferred embodiment of the method according to the invention the solvent (E) consists of benzonitrile.

In an embodiment of the method according to the invention step (iii), preferably the copolymerization is performed at reaction temperatures of $\geq$ 130 °C to $\leq$ 280 °C, preferably at a temperature of $\geq$ 140 °C to $\leq$ 240 °C, more preferred at a temperature of $\geq$ 155 °C to $\leq$ 210 °C. If temperatures below 130 °C are set, the reaction is generally very slow and also side products like isocyanurates are formed. At temperatures above 280 °C, the amount of undesirable secondary products increases considerably.

In an embodiment of the method according to the invention the calculated mass ratio of the sum of diisocyanate compound (A) the bisepoxide compound (B) and the compound (D) to the sum of diisocyanate compound (A) the bisepoxide compound (B) the compound (D) and the solvent (E) is from 10 wt-% to 90 wt-%, preferred from 20 wt-% to 85 wt-% and more preferred from 27 wt-% to 80 wt-%. If this mass ratio is too low high amounts of the solvent (E) need to be removed e.g. by distillation which causes additional production time and undesirable energy consumption. This leads to a more efficient overall process due to energy savings and reduction of solvent amounts. If the solids content is too high the viscosity of the copolymerization process is too high to assure a sufficient mixing thus leading to mass transport limitations.

In an embodiment of the method according to the invention the catalyst (C) is present in an amount of $\geq$ 0.008 to $\leq$ 2.0 weight-%, based on the theoretical yield of thermoplastic polyoxazolidinone and the reaction temperature of the copolymerization is $\geq$ 180 °C to $\leq$ 210 °C. This leads to thermoplastic polyoxazolidinones (1) with a high oxazolidinone to isocyanate ratio and a decreased polydispersity.

In an embodiment of the method according to the invention the copolymerization is performed at reaction times of 1 h to 20 h, preferably at 1 h to 10 h and more preferably at 1 h to 6 h.

Another aspect of the present invention is a thermoplastic polyoxazolidinone (1), obtainable by a process according to one of claims 1 to 11, wherein the thermoplastic polyoxazolidinone has a number average molecular weight Mn from $\geq$ 500 to $\leq$ 500'000 g/mol, more preferred $\geq$ 1'000 to $\leq$ 50'000 g/mol and even more preferred $\geq$ 5'000 to $\leq$ 25'0000 g/mol as determined with gel permeation chromatography (GPC), wherein the GPC is performed on an Agilent 1100 Series instrument with $N,N$-dimethylacetamide (DMAC) + LiBr (1.7 g·L$^{-1}$) as the eluent, PSS GRAM analytical columns (1 x 100 Å, 2 x 3000 Å) from PSS, equipped with a refractive index (RI) detector, wherein the column flow rate in all measurements is set to 1 mL·min$^{-1}$, wherein for determining molecular weight, the calibration is performed with poly(styrene) standards (ReadyCal-Kit PS - Mp 370-2520000Da from PSS), and wherein the samples are analysed using PSS WinGPC UniChrom V 8.2 Software.

An further aspect of the present invention is a process for producing a thermoplastic polyoxazolidinone (2), wherein the thermoplastic polyoxazolidinone (1) obtainable by a process according to one of claims 1 to 13 is further reacted with a compound (F) forming a thermoplastic polyoxazolidinone (2), wherein compound (F), comprises at least one of a monofunctional isocyanate, a monofunctional epoxide, a cyclic carbonate, a monofunctional alcohol, and a monofunctional amine, preferably a monofunctional epoxide. The compound (F) acts as a chain regulator for the thermoplastic polyoxazolidinone and further increases the thermal stability of the thermoplastic polyoxazolidinone.

The compound (F) is added as chain regulator to the reaction mixture after the reaction between the bisepoxide (B) and diisocyanate (A) forming the thermoplastic polyoxazolidinone (1) has been completed. Without being bound to a theory, the terminal e.g. the epoxide groups or the terminal isocyanate groups resulting from the reaction of the bisepoxide and the diisocyanate will be converted to inert end groups by reaction with the regulator. The excess amount of regulator is subsequently removed from the product, e.g., by extraction, precipitation, distillation, stripping or thin film evaporation.

Suitable monofunctional alcohols are for example linear primary alcohols such as methanol, ethanol, propanol, n-butanol, n-pentanol, n-hexanol, n-heptanol, n-octanol, n-nonanol, n-decanol, n-dodecanol, n- tetradecanol, n-hexadecanol, n-octadecanol and n-eicosanol. Suitable branched primary monofunctional alcohols are for example isobutanol, isopentanol, isohexanol, isooctanol, isostearyl alcohol and iso-palmityl alcohol, 2-ethylhexyl alcohol, 3-n-propyl heptyl alcohol, 2-n-propyl heptyl alcohol, and 3- isopropyl heptyl alcohol. Suitable secondary monofunctional alcohols are for example isopropanol, sec-butanol, sec-pentanol (pentane- 2-ol), pentane-3-ol, cyclopentanol, cyclohexanol, sec-hexanol (hexane- 2-ol), hexane-3-ol, sec- heptanol (heptane-2-ol), heptane-3-ol, sec-decanol and decan-3-ol.Examples of suitable tertiary monofunctional alcohols are tert-butanol and tert-amyl alcohol.

Aromatic monofunctional alcohols such as phenol, cresol, thymol, benzyl alcohol and 2-phenylethanol can also be used.

In a further embodiment of the invention the compound (F) is a branched, an unbranched aliphatic, a alicyclic and/or an aromatic monofunctional isocyanate.

Suitable monofunctional isocyanates are for example n-hexylisocyanate, cyclohexyl isocyanate, ω-chlorohexamethylene isocyanate, 2-ethyl hexyl isocyanate, n-octyl isocyanate, dodecyl isocyanate, stearyl isocyanate, methyl isocyanate, ethyl isocyanate, butyl isocyanate, isopropyl isocyanate, octadecyl isocyanate, 6-chloro-hexyl isocyanate, cyclohexyl isocyanate, 2,3,4-trimethylcyclohexyl isocyanate, 3,3,5-trimethylcyclohexyl isocyanate, 2-norbornyl methyl isocyanate, decyl isocyanate, dodecyl isocyanate, tetradecyl isocyanate, hexadecyl isocyanate, octadecyl isocyanate, 3-butoxypropyl isocyanate, 3 - (2-ethylhexyloxy)-propyl isocyanate, (trimethylsilyl)isocyanate, phenyl isocyanate, ortho-, meta-, para-tolyl isocyanate, chlorophenyl isocyanate (2,3,4-isomers), dichlorophenyl isocyanate, 4-nitrophenyl isocyanate, 3-trifluoromethylphenyl isocyanate, benzyl isocyanate, dimethylphenylisocyanate (technical mixture and individual isomers), 4-dodecylphenylisocyanat, 4-cyclohexyl-phenyl isocyanate, 4-pentyl-phenyl isocyanate, 4-t-butyl phenyl isocyanate, 1-naphthyl isocyanat

In an embodiment of the invention the compound (F) is a branched, anunbranched aliphatic, an alicyclic and/or an aromatic monofunctional amine. Specific examples of the aliphatic monofunctional amine include hexylamine, heptylamine, octylamine, nonylamine, decylamine, undecylamine, dodecylamine, tridecylamine, tetradecylamine, pentadecylamine, hexadecylamine, heptadecyl. Examples include amine, octadecylamine, nonadecylamine, icosylamine, henecosylamine, docosylamin. Specific examples of the alicyclic monofunctional amine include cyclohexylamine, 2-methylcyclohexylamine, 3-methylcyclohexylamine, 4-methylcyclohexylamine, 2,3-dimethylcyclohexylamine, 2,4-dimethylcyclohexylamine, 2-ethylcyclohexylamine, 3-ethylcyclohexylamine, 4-ethylcyclohexylamine, 2-n-propylcyclohexylamine, 3-n-propylcyclohexylamine, 4-n-propylcyclohexylamine, 2-iso-propylcyclohexylamine, 3-iso-propylcyclohexylamine, 4-iso-propylcyclohexylamine, 2-n-butylcyclohexylamine, 3-n-butylcyclohexylamine, 4-n-butylcyclohexyl Silamine, 2-iso-butylcyclohexylamine, 3-iso-butylcyclohexylamine, 4-iso-butylcyclohexylamine, 2-tert-butylcyclohexylamine, 3-tert-butylcyclohexylamine, 4-tert-butylcyclohexylamine, 2-n-octylcyclohexylamine, 3-n-octylcyclohexylamine, 4-n-octylcyclohexylamine, cyclohexylmethylamine, 2-methylcyclohexylmethylamine, 3-methylcyclohexylmethylamine, 4-methylcyclohexylmethylamine, dimethyl Cyclohexylmethylamine, trimethylcyclohexylmethylamine, methoxycyclohexylmethylamine, ethoxycyclohexylmethylamine, dimethyl Carboxymethyl cyclohexylmethyl amine, methoxy cyclohexylethylamine, dimethoxy cyclohexylethylamine, methylcyclohexylamine propylamine, dodecylamine cyclohexylamine.

Specific examples of the aromatic monofunctional amine include aniline, 1-naphthylamine, 2-naphthylamine, 1-aminoanthracene, o-toluidine, p-toluidine, m-toluidine, 2-ethylaniline, 3-ethylaniline, 4 -Ethylaniline, 2-propylaniline, 3-propylaniline, 4-propylaniline, cumidine, 2-n-butylaniline, 3-n-butylaniline, 4-n-butylaniline, 2-isobutylaniline, 3-isobutyl Aniline, 4-isobutylaniline, 2-sec-butylaniline, 3-sec-butylaniline, 4-sec-butylaniline, 2-tert-butylaniline, 3-tert-butylaniline, 4-tert-butylaniline, 2 -N-pentylaniline, 3-n-pentylaniline 4-n-pentylaniline, 2-isopentylaniline, 3-isopentylaniline, 4-isopentylaniline, 2-sec-pentylaniline, 3-sec-pentylaniline, 4-sec-pentylaniline, 2-tert -Pentylaniline, 3-tert-pentylaniline, 4-tert-pentylaniline, 2-hexylaniline, 3-hexylaniline, 4-hexylaniline, 2-heptylaniline, 3-heptylaniline, 4-heptylaniline, 2- Octylaniline, 3-octylaniline, 4-octylaniline, 2-nonylaniline, 3-nonylaniline, 4-nonylaniline, 2-decylaniline, 3-decylaniline, 4-decylaniline, cyclohexylaniline, diphenylamine, dimethylaniline , Diethylaniline, dipropylaniline, diisopropylaniline, di-n-butylaniline, di-sec-butylaniline, di-tert-butylaniline, trimethylaniline, triethylaniline, tripropylaniline, tri-tert-butylaniline, Anisidine, ethoxyaniline, dimethoxyaniline, diethoxyaniline, trimethoxyaniline, tri-n-butoxyaniline, benzylamine, methylbenzylamine, dimethylbenzylamine, trimethylbenzylamine, methoxybenzylamine, ethoxybenzylamine, dimethoxybenzylamine, α-phenylethylamine, β-phenylethylamine, methoxyphenylethylamine, dimethoxyphenylethylamine, α-phenylpropylamine, β Phenylpropylamine, .gamma. phenylpropylamine, methyl phenylpropylamine.

In an embodiment of the invention the compound (F) is at least one compound selected from the group consisting of 4-phenyl-1,3-dioxolan-2-one (styrene carbonate), 1,3-dioxolan-2-one (ethylene carbonate), 4-Methyl-1,3-dioxolan-2-one (propylene carbonate).

In a preferred embodiment of the invention the compound (F) is at least one compound selected from the group consisting of phenyl glycidyl ether, o-cresyl glycidyl ether, m-cresyl glycidyl ether, p-cresyl glycidyl ether, 1-naphthyl glycidyl ether, 2-naphthyl glycidyl ether, 4-chlorophenyl glycidyl ether, 2,4,6-trichlorophenyl glycidyl ether, 2,4,6-tribromophenyl glycidyl ether, pentafluorophenyl glycidyl ether, cyclohexyl glycidyl ether, benzyl glycidyl ether, glycidyl benzoate, glycidyl acetate, glycidyl cyclohexylcarboxylate, methyl glycidyl ether, ethyl glycidyl ether, butyl glycidyl ether, hexyl glycidyl ether, 2-ethylhexyl glycidyl ether, octyl glycidyl ether, C10 - C18 alkyl glycidyl ether, allyl glycidyl ether, ethylene oxide, propylene oxide, styrene oxide, 1,2-butene oxide, 2,3-butene oxide, 1,2-hexene oxide, oxides of C10-C18 alpha-olefines, cyclohexene oxide, vinylcyclohexene monoxide, limonene monoxide, butadiene monoepoxide, *N*-glycidyl phthalimide, and 4-tert-butylphenyl glycidyl ether.

In a preferred embodiment of the invention the compound (F) is 4-tert-butylphenyl glycidyl ether and/or phenyl glycidyl ether and/or o-cresyl glycidyl ether and/or styrene oxide.

In a preferred embodiment of the invention compound (D) and compound (F) are monofunctional epoxides. Using monofunctional epoxides as compound (D) and compound (F) leads to thermoplastic polyoxazolidinones (2) with an increased oxazolidinone to isocyanurate ratio and a lower polydispersity.

In a more preferred embodiment of the invention compound (D) and compound (F) are 4-tert-butylphenyl glycidyl ether and/or phenyl glycidyl ether and/or o-cresyl glycidyl ether and/or styrene oxide.

In an embodiment of the method according to the invention, the compound (F) is present in an amount of $\geq 0.1$ to $\leq 10.0$ weight-%, preferably in an amount of $\geq 0.2$ to $\leq 8.0$ weight-%, more preferred $\geq 0.5$ to $\leq 7.0$ weight-%, based on the theoretical yield of thermoplastic polyoxazolidinone.

In an embodiment of the method according to the invention the reaction of the polyoxazolidinone (1) with the compound (F) is performed at reaction temperatures of $\geq 130$ °C to $\leq 280$ °C, preferably at a temperature of $\geq 140$ °C to $\leq 240$ °C, more preferred at a temperature of $\geq 155$ °C to $\leq 210$ °C. If temperatures below 130 °C are set, the reaction with the compound (F) is very slow. At temperatures above 280 °C, the amount of undesirable secondary products increases considerably.

In an embodiment of the method according to the invention reaction of the polyoxazolidinone (1) with the compound (F) is performed at reaction times of 1 h to 20 h, preferably at 1 h to 10 h and more preferably at 1 h to 6 h.

In an embodiment the method according to the invention is performed in the absence of a solvent (G) with a boiling point higher than 200 °C at 1 bar (absolute). Due to the absence of high amounts of high boiling solvent a negative impact subsequent extrusion and injection molding processes of the thermoplastic polyoxazolidinones can be reduced, such as unwanted foaming, unsuitable viscosity and explosive atmosphere. Therefore, the solvent that is in general necessary for the synthesis of the polyoxazolidinone should be quantitatively removed e.g. by distillation method below 1500 ppm at elevated temperatures and reduced pressures wherein the thermal decomposition of the polyoxazolidinone resulting in a higher polydispersity and an undesirable colouring of the desolvated polyoxazolidinone should be minimized to obtain desolvatised polyoxazolidinone with good thermoplastic properties and an improved thermostability.

Such solvents (G) include for example cyclic carbonate, such as ethylencarbonate or propylencarbonate, *N*-methylpyrrolidone (NMP) and sulfolane. The absence of this additional solvent (G) reduces the energy-intensive and time-consuming removal process, e.g. distillation, of this high boiling solvents.

In a preferred embodiment of the invention benzonitrile is applied as solvent (E) and no solvents (G) such as ethylencarbonate or propylencarbonate, N-methylpyrrolidone (NMP) and sulfolane are used.

Also the thermoplastic polyoxazolidinone (2) obtainable by the inventive process is an aspect of the invention, wherein the Thermoplastic polyoxazolidinone (2), obtainable by a process according to claim 14, wherein the thermoplastic polyoxazolidinone has a number average molecular weight Mn from $\geq 500$ to $\leq 500'000$ g/mol, more preferred $\geq 1'000$ to $\leq 50'000$ g/mol and even more preferred $\geq 5'000$ to $\leq 25'0000$ g/mol as determined with gel permeation chromatography (GPC), wherein the GPC is performed on an Agilent 1100 Series instrument with *N,N*-dimethylacetamide (DMAC) + LiBr (1.7 g·L$^{-1}$) as the eluent, PSS GRAM analytical columns (1 x 100 Å, 2 x 3000 Å) from PSS, equipped with a refractive index (RI) detector, wherein the column flow rate in all measurements is set to 1 mL·min$^{-1}$, wherein for determining molecular weight, the calibration is performed with poly(styrene) standards (ReadyCal-Kit PS - Mp 370-2520000Da from PSS), and wherein the samples are analysed using PSS WinGPC UniChrom V 8.2 Software.

The present invention further relates to a spun fibre, comprising a thermoplastic polyoxazolidinone (1) and/or thermoplastic polyoxazolidinone (2) according to the invention and a textile, comprising such a spun fiber.

The method according to the invention is suited for the synthesis of oxazolidinones with interesting properties for use, for example, as pharmaceutics or antimicrobiotics.

Thermoplastic polyoxazolidinones (1) and/or (2) obtained by the method according to the invention are particularly suited as polymer building blocks in polyurethane chemistry. For example, epoxy-terminated oligomeric oxazolidinones (oligooxazolidinones) may be reacted with polyols or polyamines to form foams or thermosets. Such epoxy-terminated oligomeric oxazolidinones are also suited for the preparation of composite materials. Epoxy-terminated oligomeric oxazolidinones (oligooxazolidinones) may also be reacted with their NCO-terminated counterparts to form high molecular weight thermoplastic polyoxazolidinones, which are useful as transparent, high temperature-stable materials. Thermoplastic polyoxazolidinones with high molecular weight obtained by the method according to the invention are particularly suited as transparent, high temperature-stable thermoplastic materials.

The conventional additives for these thermoplastics, such as fillers, UV stabilizers, heat stabilizers, antistatics and pigments, can also be added in the conventional amounts to the thermoplastic polyoxazolidinones according to the invention; the mould release properties, the flow properties and/or the flame resistance can optionally also be improved by addition of external mould release agents, flow agents and/or flameproofing agents (e.g. alkyl and aryl phosphites and phosphates, alkyl- and arylphosphanes and low molecular weight carboxylic acid alkyl and aryl esters, halogen compounds, salts, chalk, quartz flour, glass fibres and carbon fibres, pigments and a combination thereof. Such compounds are described e.g. in WO 99/55772, p. 15 - 25, and in the corresponding chapters of the "Plastics Additives Handbook", ed. Hans Zweifel, 5th edition 2000, Hanser Publishers, Munich).

The thermoplastic polyoxazolidinones (1) and/or (2) obtained according to the current invention have excellent properties regarding stiffness, hardness and chemical resistance.

They are also useful in polymer blends with other polymers such as polystyrene, high-impact polystyrene (polystyrene modified by rubber for toughening, usually polybutadiene), copolymers of styrene such as styrene-acrylonitrile copolymer (SAN), copolymers of styrene, alpha-methylstyrene and acrylonitrile, styrene - methyl methacrylate copoylmers, styrene - maleic anhydride copolymers, styrene - maleimide copolymers, styrene - acrylic acid copolymers, SAN modified by grafting rubbers for toughening such as ABS (acrylonitrile-butadiene-styrene polymer), ASA (acrylonitrile-styrene-acrylate), AES (acrylonirile-EPDM-styrene), ACS (acrylonitrile-chlorinated polyethylene-stryrene) polymers, copolymers of styrene, alpha-methylstyrene and acrylonitrile modified with rubbers such as polybutadiene or EPDM, MBS/MABS (methyl methacrylate - styrene modified with rubber such as polybutadiene or EPDM), aromatic polyesters such as polyethylene terephthalate (PET), polybutylene terephthalate (PBT), polytrimethylene terephthalate (PTT), aliphatic polyamides such as PA6, PA6,6, PA4,6, PA 11 or PA 12, polylactic acid, aromatic polycarbonates such as the polycarbonate of bisphenol A, co-polycarbonates such as co-polycarbonates of bisphenol A and bisphenol TMC, polymethylmethacrylate (PMMA), polyvinylchloride, polymethyleneoxide (POM), polyphenylene ether, polyphenylene sulphide (PPS, polysulfones, polyetherimide (PEI), polyethylene, polypropylene.

They are also useful for blends in combination with the above polymers or others, for example blends of polycarbonate and ABS, polycarbonate and PET, polycarbonate and PBT, polycarbonate and ABS and PBT or polycarbonate and ABS and PBT.

The properties of the thermoplastic polyoxazolidinones (1) and /or (2) according to this invention or blends with the above-mentioned polymers or others can also be modified by fillers such as glass fibers, hollow or solid glass spheres, silica (for example fumed or precipitated silica), talcum, calcium carbonate, titanium dioxide, carbon fibers, carbon black, natural fibers such as straw, flax, cotton or wood fibers.

Thermoplastic Polyoxazolidinones (1) and/or (2) can be mixed with any usual plastics additive such as antioxidants, light stabilizers, impact modifiers, acid scavengers, lubricants, processing aids, antiblocking additives, slip additives, antifogging additives, antistatic additives, antimicrobials, chemical blowing agents, colorants, optical brighteners, fillers and reinforcements as well as flame retardant additives.

Suitable impact modifiers are typically high molecular weight elastomeric materials derived from olefins, monovinyl aromatic monomers, acrylic and methacrylic acids and their ester derivatives, as well as conjugated dienes. The polymers formed from conjugated dienes can be fully or partially hydrogenated. The elastomeric materials can be in the form of homopolymers or copolymers, including random, block, radial block, graft, and core-shell copolymers. Combinations of impact modifiers can be used.

A specific type of impact modifier is an elastomer-modified graft copolymer comprising (i) an elastomeric (i.e., rubbery) polymer substrate having a Tg less than 10°C, more specifically less than -10°C, or more specifically -40° to -80°C, and (ii) a rigid polymeric shell grafted to the elastomeric polymer substrate. Materials suitable for use as the elastomeric phase include, for example, conjugated diene rubbers, for example polybutadiene and polyisoprene; copolymers of a conjugated diene with less than 50 wt% of a copolymerizable monomer, for example a monovinylic compound such as styrene, acrylonitrile, n-butyl acrylate, or ethyl acrylate; olefin rubbers such as ethylene propylene copolymers (EPR) or ethylene-propylene-diene monomer rubbers (EPDM); ethylenevinyl acetate rubbers; silicone rubbers; elastomeric C1-8 alkyl (meth)acrylates; elastomeric copolymers of C1-8 alkyl (meth)acrylates with butadiene and/or styrene; or combinations comprising at least one of the foregoing elastomers. materials suitable for use as the rigid phase include, for example, monovinyl aromatic monomers such as styrene and alpha-methyl styrene, and monovinylic monomers such as acrylonitrile, acrylic acid, methacrylic acid, and the C1-C6 esters of acrylic acid and methacrylic acid, specifically methyl methacrylate.

Specific exemplary elastomer-modified graft copolymers include those formed from styrene-butadiene-styrene (SBS), styrene-butadiene rubber (SBR), styrene-ethylene-butadiene-styrene (SEBS), ABS (acrylonitrile-butadiene-styrene), acrylonitrile-ethylene-propylene-diene-styrene (AES), styrene-isoprene-styrene (SIS), methyl methacrylate-butadiene-styrene (MBS), and styrene-acrylonitrile (SAN).

Impact modifiers are generally present in amounts of 1 to 30 wt%, specifically 3 to 20 wt%, based on the total weight of the polymers in the flame retardant composition. An exemplary impact modifier comprises an acrylic polymer in an amount of 2 to 15 wt%, specifically 3 to 12 wt%, based on the total weight of the flame retardant composition.

The composition may also comprise mineral fillers. In an embodiment, the mineral fillers serve as synergists. The synergist facilitates an improvement in the flame retardant properties when added to the flame retardant composition over a comparative thermoplastic polyoxazolidinone composition that contains all of the same ingredients in the same quantities except for the synergist. Examples of mineral fillers are mica, talc, calcium carbonate, dolomite, wollastonite, barium sulfate, silica, kaolin, feldspar, barytes, or the like, or a combination comprising at least one of the foregoing mineral fillers. The mineral filler may have an average particle size of 0.1 to 20 micrometers, specifically 0.5 to 10 micrometers, and more specifically 1 to 3 micrometers. An exemplary mineral filler it talc having an average particle size of 1 to 3 micrometers..

The mineral filler is present in amounts of 0.1 to 20 wt%, specifically 0.5 to 15 wt%, and more specifically 1 to 5 wt%, based on the total weight of the flame retardant composition.

The thermoplastic polyoxazolidinones can also be colored with a whole range of soluble organic dyes and with pigment dyes, which can be either organic or inorganic.

Further possible uses of the thermoplastic polyoxazolidinones according to the invention are:

01. Housing for electrical appliances (e.g. household appliances, computers, mobile phones, display screens, television,...), including transparent or translucent housing parts like lamp covers.

02. Light guide panels and BLUs

03. Optical Data Storage (CD, DVD, Blu-ray Discs)

04. electrically insulating materials for electrical conductors, for plug housings and plug connectors, carrier material for organic photoconductors, Chip boxes and chip supports, fuse encapsulation

05. Static dissipative / electrically conductive formulations for use in explosion protection applications and others with respective requirements

06. Optics, diffusers, reflectors, light guides as well as housings for LED and conventional Lighting, e.g. streetlights, industrial lamps, searchlights, traffic lights,...

07. Thermally conductive formulations for thermal management applications like heatsinks.

08. Applications for Automotive and other Transportation vehicles (cars, buses, trucks, railway, aircrafts, ships) as Glazing, also safety glazing, lighting (e.g. headlamp lenses, tail lights, turn signals, back-up lights, fog lights; bezels and reflectors), sun and panoramic roofs, cockpit canopies, cladding of railway or other cabins, Windscreens, interiors and exteriors parts (e.g. instrument covers, consoles, dashboards, mirror housings, radiator grilles, bumpers, spoilers),

09. EVSE and batteries

10. Metal substitution in gears, seals, supporting rings

11. Roof structures (e.g. for sports arenas, stations, conservatories, greenhouses)

12. windows (including theft-proof windows and projectile-resistant windows, teller's windows, barriers in banks),

13. partition walls

14. solar panels

15. Medical devices (components of blood pumps, auto-injectors and mobile medical-injection pumps, IV access devices, renal therapy and inhalation devices (such as nebulizers, inhalers) sterilisable surgical instruments, medical implants, oxygenators, dialyzers, ...)

16. Foodcontact applications (tableware, dinnerware, glasses, tumblers, food containers, institutional food trays, water bottles, water filter systems)

17. sports articles, such as e.g. slalom poles or ski boot buckles.

18. household articles, such as e.g. kitchen sinks and letterbox housings.

19. safety applications (glasses, visors or optical corrective glasses, helmets, visors, riot gear (helmets and shields), safety panes)

20. Sunglasses, swimming goggles, SCUBA masks

21. Signs, displays, poster protection

22. Lightweight luggage

23. water fitting, pump impellors, thin hollow fibres for water treatment

24. Industrial pumps, valves and seals, connectors

25. Membranes

26. Gas separation

27. Coating applications (e.g. Anticorrosion paint, powder coating)

This application likewise provides the shaped articles and mouldings and extrudates from the polymers according to the invention.

## Examples

The present invention will be further described with reference to the following examples without wishing to be limited by them.

*Diisocyanate compound (A)*

MDI    4,4'-Methylene diphenyl diisocyanate, 98 %, Covestro AG, Germany

*Epoxide compound (B)*

BADGE    2-[[4-[2-[4-(Oxiran-2-ylmethoxy)phenyl]propan-2-yl]phenoxy]methyl]oxirane   (Bisphenol-A-diglycidylether), difunctional epoxide, D.E.R. 332 (Dow) was used without any further purification. (EEW: 171-175 g/eq.)

*Catalyst (C)*

TPPCl    Tetraphenylphosphoniumchlorid (Sigma-Aldrich, 98 %)

LiCl    Lithiumchlorid (Sigma-Aldrich, >99.9 %)

*Compound (D) and (F)*

BPGE    para-*tert*.-butylphenyl glycidyl ether (ABCR Dr. Braunagel GmbH + Co.KG)

*Solvents (E)*

o-DCB    *Ortho*-dichlorobenzene (o-DCB), purity 99 %, anhydrous, was obtained from Sigma-Aldrich, Germany

Benzonitrile    purity 99 %, was obtained from Acros Organics, Germany

*Solvents (G)*

Sulfolane    Acros Organics, 99 %

o-DCB, sulfolane, benzonitrile, NMP, MDI, BADGE, TPPCl, LiCl, and BPGE were used as received without further purification. BADGE and sulfolane were used after melting at 50°C, while BPGE was stored at 7 °C.

*Characterisation of thermoplastic polyoxazolidinone*

The average chain length of the thermoplastic polyoxazolidinones was controlled by the molar ratio of bisepoxide, diisocyanate and/or compound (D).

The formula below gives a general mathematical formula to calculate the average chain length n in the polymeric product obtained with a diisocyanate (A) and a bisepoxide (B):

$$n = (1 + q) / (1 + q - 2pq) \tag{III}$$

with q = $n_x$ / $n_y$ ≤ 1 and x,y = bisepoxide (B) or diisocyanate (A)
and with the conversion p
whereby $n_x$ and $n_y$ are the molar amounts of bisepoxide or diisocyanate, respectively.

The average molecular weight M of the thermoplastic polyoxazolidinones can be calculated by the formula given below

$$M = n*((M_A+M_B)/2) + (2*M_D) \qquad (IV)$$

With $M_A$, $M_B$, and $M_D$ being the molar masses of the compounds (A), (B), and (D).

IR-spectroscopy

Solid state IR analyses were performed on a Bruker ALPHA IR spectrometer equipped with a diamond probe head. The software OPUS 7.5 was used for data treatment. A background spectrum was recorded against ambient air. Thereafter, a small sample of the thermoplastic polyoxazolidinone (2 mg) was applied to the diamond probe and the IR spectrum recorded averaging over 24 spectra obtained in the range of 4000 to 400 $cm^{-1}$ with a resolution of 4 $cm^{-1}$.

The OXA:PIR ratio was calculated by means of the signal height within the IR-spectroscopy. Therefore, samples from the crude reaction product mixture were analysed via ATR-IR-spectroscopy. The characteristic carbonyl band at 1753 $cm^{-1}$ was used for the oxazolidinone group, while the signal at 1710 $cm^{-1}$ was used for the determination of the isocyanurate amount. The OXA:PIR ratio was calculated based on following formula:

$$\text{OXA:PIR} = OXA:PIR = \frac{\text{hight of signal at } 1753\ cm^{-1}}{\text{hight of signal at } 1710\ cm^{-1}} \qquad (V)$$

SEC:

The determination of the number average molecular weights, weight average molecular weights and the polydispersity index were carried out by gel permeation chromatography (GPC). GPC was performed on an Agilent 1100 Series instrument with *N,N*-dimethylacetamide (DMAC) + LiBr (1.7 g·L$^{-1}$) as the eluent, PSS GRAM analytical columns (1 x 100 Å, 2 x 3000 Å) from PSS, equipped with a refractive index (RI) detector. The column flow rate in all measurements was set to 1 mL·min$^{-1}$. For determining molecular weights, the calibration was performed with poly(styrene) standards (ReadyCal-Kit PS - Mp 370-2520000Da from PSS). The samples were analysed using PSS WinGPC UniChrom V 8.2 Software.

Example 1(comparative): *Reaction of methylene diphenyl diisocyanate (MDI) as diisocyanate (A) with Bisphenol A diglycidyl ether (BADGE) as diepoxide (B), using LiCl as catalyst (C), para-tert-butylphenyl glycidyl ether (BPGE) as compound (D) and as compound (F)in o-DCB as solvent (E), and sulfolane as high boiling co-solvent*

Under a continuous flow of nitrogen, a glass flask (500 mL) was charged with LiCl (0.0999 g) and sulfolane (28 mL) and stirred at 175°C for 15 min. Subsequently, ortho-dichlorobenzene (95 mL) was added. A glass bottle (250 mL) was charged with methylene diphenyl diisocyanate (MDI) (29.4931 g), Bisphenol A diglycidyl ether (38.5141 g), *para-tert*-butylphenyl glycidyl ether (1.9449 g), and *ortho*-dichlorobenzene (85 mL). The monomer solution was added slowly to the catalyst solution within 90 min. After the addition was finished, the reaction was stirred at 175°C for another 30 min. After a total reaction time of 120 min, para-tert-butylphenyl glycidyl ether (4.8637 g), dissolved in *ortho*-dichlorobenzene (10 mL), was added to the reaction solution. After the addition the reaction was stirred at 175°C for another 180 min. The completion of the reaction was confirmed by the absence of the isocyanate band (2260 $cm^{-1}$) in the IR spectrum of the reaction mixture. Subsequently, NMP (107 ml) was added to homogenize the reaction mixture and the viscous solution was allowed to cool down to ambient temperature. The precipitation of the polymer was performed in ethanol at ambient temperature: Therefore, the product mixture (ca. 50 mL) was added slowly into 200 mL of ethanol and milled with an Ultra-Turrax dispersing instrument from IKA. The product was washed with ethanol, filtered, and dried at ambient temperature overnight. Subsequently, the product was dried under vacuum (50 mbar) at 160°C for 6 h.

Example 2 (comparative): *Reaction of methylene diphenyl diisocyanate (MDI) as diisocyanate (A) with Bisphenol A diglycidyl ether (BADGE) as diepoxide (B), using LiCl as catalyst (C), para-tert-butylphenyl glycidyl ether (BPGE) as compound (D) and as compound (F) in o-DCB as solvent (E)*

Under a continuous flow of nitrogen, a glass flask (500 mL) was charged with LiCl (0.0999 g) and ortho-dichlorobenzene (95 mL) and stirred at 175°C for 15 min. A glass bottle (250 mL) was charged with methylene diphenyl diisocyanate (MDI) (29.4931 g), Bisphenol A diglycidyl ether (38.5141 g), *para-tert*-butylphenyl glycidyl ether (1.9449 g), and *ortho*-dichlorobenzene (85 mL). The monomer solution was added slowly to the catalyst solution within 90 min. After the addition was finished, the reaction was stirred at 175°C for another 30 min. After a total reaction time of 120 min, para-tert-butylphenyl glycidyl ether (4.8637 g), dissolved in *ortho*-dichlorobenzene (10 mL), was added to the reaction solution. After the addition the reaction was stirred at 175°C for another 180 min. The presence of the isocyanate band (2260 cm$^{-1}$) in the IR spectrum of the reaction mixture showed an incomplete conversion. Subsequently, the mixture was allowed to cool down to ambient temperature. As no significant amount of polymeric product was formed, no product isolation was conducted.

Example 3(comparative): *Reaction of methylene diphenyl diisocyanate (MDI) as diisocyanate (A) with Bisphenol A diglycidyl ether (BADGE) as diepoxide (B), using tetraphenylphosphonium chloride (TPPCl) as catalyst (C), para-tert-butylphenyl glycidyl ether (BPGE) as compound (D) and as compound (F) in o-DCB as solvent (E)*

Under a continuous flow of nitrogen, a glass flask (500 mL) was charged with tetraphenylphosphonium chloride (TPPCl, 0.8834 g) and ortho-dichlorobenzene (92 mL). Subsequently, the mixture was heated to 175°C and stirred for 15 min. A glass bottle (250 mL) was charged with methylene diphenyl diisocyanate (MDI) (29.4931 g), Bisphenol A glycidyl ether (38.5141 g), *para-tert*-butylphenyl glycidyl ether (1.9449 g), and ortho-dichlorobenzene (77 mL). The monomer solution was added slowly to the catalyst solution within 90 min. After the addition was finished, the reaction was stirred at 175°C for another 30 min. After a total reaction time of 120 min, para-tert-butylphenyl glycidyl ether (4.8637 g), dissolved in *ortho*-dichlorobenzene (10 mL), was added to the reaction solution. After the addition the reaction was stirred at 175°C for another 180 min. The completion of the reaction was confirmed by the absence of the isocyanate band (2260 cm$^{-1}$) in the IR spectrum of the reaction mixture. Subsequently, NMP (107 ml) was added to homogenize the reaction mixture and the viscous solution was allowed to cool down to ambient temperature. The precipitation of the polymer was performed in ethanol at ambient temperature: Therefore, the product mixture (ca. 50 mL) was added slowly into 200 mL of ethanol and milled with an Ultra-Turrax dispersing instrument from IKA. The product was washed with ethanol, filtered, and dried at ambient temperature overnight. Subsequently, the product was dried under vacuum (50 mbar) at 160°C for 6 h.

Example 4(comparative): *Reaction of methylene diphenyl diisocyanate (MDI) as diisocyanate (A) with Bisphenol A diglycidyl ether (BADGE) as diepoxide (B), using tetraphenylphosphonium chloride (TPPCl) as catalyst (C), and para-tert-butylphenyl glycidyl ether (BPGE) as compound (D) in o-DCB as solvent (E)*

Under a continuous flow of nitrogen, a glass flask (500 mL) was charged with tetraphenylphosphonium chloride (TPPCl, 0.8834 g) and ortho-dichlorobenzene (92 mL). Subsequently, the mixture was heated to 175°C and stirred for 15 min. A glass bottle (250 mL) was charged with methylene diphenyl diisocyanate (MDI) (29.4931 g), Bisphenol A glycidyl ether (38.5141 g), *para-tert*-butylphenyl glycidyl ether (1.9449 g), and *ortho*-dichlorobenzene (77 mL). The monomer solution was added slowly to the catalyst solution within 90 min. After the addition was finished, the reaction was stirred at 175°C for another 210 min. The completion of the reaction was confirmed by the absence of the isocyanate band (2260 cm$^{-1}$) in the IR spectrum of the reaction mixture. Subsequently, NMP (107 ml) was added to homogenize the reaction mixture and the viscous solution was allowed to cool down to ambient temperature. The precipitation of the polymer was performed in ethanol at ambient temperature: Therefore, the product mixture (ca. 50 mL) was added slowly into 200 mL of ethanol and milled with an Ultra-Turrax dispersing instrument from IKA. The product was washed with ethanol, filtered, and dried at ambient temperature overnight. Subsequently, the product was dried under vacuum (50 mbar) at 160°C for 6 h.

Example 5: *Reaction of methylene diphenyl diisocyanate (MDI) as diisocyanate (A) with Bisphenol A diglycidyl ether (BADGE) as diepoxide (B), using tetraphenylphosphonium chloride (TPPCl) as catalyst (C), para-tert-butylphenyl glycidyl ether (BPGE) as compound (D) and as compound (F) in benzonitrile as solvent (E)*

Under a continuous flow of nitrogen, a glass flask (500 mL) was charged with tetraphenylphosphonium chloride (TPPCl, 0.8834 g) and benzonitrile (92 mL). Subsequently, the mixture was heated to 175°C and stirred for 15 min. A glass bottle (250 mL) was charged with methylene diphenyl diisocyanate (MDI) (29.4931 g), Bisphenol A glycidyl ether (38.5141 g), *para*-tert-butylphenyl glycidyl ether (1.9449 g), and benzonitrile (79 mL). The monomer solution was added slowly to the catalyst solution within 90 min. After the addition was finished, the reaction was stirred at 175°C for another 30 min. After a total reaction time of 120 min, para-tert-butylphenyl glycidyl ether (4.8637 g), dissolved in benzonitrile (10 mL), was added to the reaction solution. After the addition the reaction was stirred at 175°C for another 180 min. The completion of the reaction was confirmed by the absence of the isocyanate band (2260 cm$^{-1}$) in the IR spectrum of the reaction mixture. Subsequently, the clear reaction solution was allowed to cool down to ambient temperature. The precipitation of the polymer was performed in ethanol at ambient temperature: Therefore, the product mixture (ca. 50 mL) was added slowly into 200 mL of ethanol and milled with an Ultra-Turrax dispersing instrument from IKA. The product was washed with ethanol, filtered, and dried at ambient temperature overnight. Subsequently, the product was dried under vacuum (50 mbar) at 160°C for 6 h.

Example 6: *Reaction of methylene diphenyl diisocyanate (MDI) as diisocyanate (A) with Bisphenol A diglycidyl ether (BADGE) as diepoxide (B), using tetraphenylphosphonium chloride (TPPCl) as catalyst (C), para-tert-butylphenyl glycidyl ether (BPGE) as compound (D) added in step (a), no compound (F), benzonitrile as solvent (E), and no solvent (G)*

Under a continuous flow of nitrogen, a glass flask (500 mL) was charged with tetraphenylphosphonium chloride (TPPCl, 0.8834 g) and benzonitrile (92 mL). Subsequently, the mixture was heated to 175°C and stirred for 15 min. A glass bottle (250 mL) was charged with methylene diphenyl diisocyanate (MDI) (29.4931 g), Bisphenol A glycidyl ether (38.5141 g), *para-tert*-butylphenyl glycidyl ether (1.9449 g), and benzonitrile (79 mL). The monomer solution was added slowly to the catalyst solution within 90 min. After the addition was finished, the reaction was stirred at 175°C for another 210 min. The completion of the reaction was confirmed by the absence of the isocyanate band (2260 cm$^{-1}$) in the IR spectrum of the reaction mixture. Subsequently, the clear reaction solution was allowed to cool down to ambient temperature. The precipitation of the polymer was performed in ethanol at ambient temperature: Therefore, the product mixture (ca. 50 mL) was added slowly into 200 mL of ethanol and milled with an Ultra-Turrax dispersing instrument from IKA. The product was washed with ethanol, filtered, and dried at ambient temperature overnight. Subsequently, the product was dried under vacuum (50 mbar) at 160°C for 6 h.

Example 7: *Reaction of methylene diphenyl diisocyanate (MDI) as diisocyanate (A) with Bisphenol A diglycidyl ether (BADGE) as diepoxide (B), using tetraphenylphosphonium chloride (TPPCl) as catalyst (C), para-tert-butylphenyl glycidyl ether (BPGE) as compound (D), and benzonitrile as solvent (E)*

Under a continuous flow of nitrogen, a glass flask (500 mL) was charged with tetraphenylphosphonium chloride (TPPCl, 0.8834 g) and benzonitrile (92 mL). Subsequently, the mixture was heated to 175°C and stirred for 15 min. A glass bottle (250 mL) was charged with methylene diphenyl diisocyanate (MDI) (29.4931 g), Bisphenol A glycidyl ether (38.5141 g), *para-tert*-butylphenyl glycidyl ether (1.9449 g), and benzonitrile (79 mL). The monomer solution was added slowly to the catalyst solution within 90 min. After the addition was finished, the reaction was stirred at 175°C for another 30 min. The completion of the reaction was confirmed by the absence of the isocyanate band (2260 cm$^{-1}$) in the IR spectrum of the reaction mixture. Subsequently, the clear reaction solution was allowed to cool down to ambient temperature. The precipitation of the polymer was performed in ethanol at ambient temperature: Therefore, the product mixture (ca. 50 mL) was added slowly into 200 mL of ethanol and milled with an Ultra-Turrax dispersing instrument from IKA. The product was washed with ethanol, filtered, and dried at ambient temperature overnight. Subsequently, the product was dried under vacuum (50 mbar) at 160°C for 6 h.

Example 8: *Reaction of methylene diphenyl diisocyanate (MDI) as diisocyanate (A) with Bisphenol A diglycidyl ether (BADGE) as diepoxide (B), using tetraphenylphosphonium chloride (TPPCl) as catalyst (C), and benzonitrile as solvent (E)*

Under a continuous flow of nitrogen, a glass flask (500 mL) was charged with tetraphenylphosphonium chloride (TPPCl, 0.8834 g) and benzonitrile (92 mL). Subsequently, the mixture was heated to 175°C and stirred for 15 min. A glass bottle (250 mL) was charged with methylene diphenyl diisocyanate (MDI) (29.4931 g), Bisphenol A glycidyl ether (38.5141 g), and benzonitrile (79 mL). The monomer solution was added slowly to the catalyst solution within 90 min. After the addition was finished, the reaction was stirred at 175°C for another 210 min. The completion of the reaction was confirmed by the absence of the isocyanate band (2260 cm$^{-1}$) in the IR spectrum of the reaction mixture. Subsequently, the clear reaction solution was allowed to cool down to ambient temperature. The precipitation of the polymer was performed in ethanol at ambient temperature: Therefore, the product mixture (ca. 50 mL) was added slowly into 200 mL of ethanol and milled with an Ultra-Turrax dispersing instrument from IKA. The product was washed with ethanol, filtered, and dried at ambient temperature overnight. Subsequently, the product was dried under vacuum (50 mbar) at 160°C for 6 h.

Example 9: *Reaction of methylene diphenyl diisocyanate (MDI) as diisocyanate (A) with Bisphenol A diglycidyl ether (BADGE) as diepoxide (B), using tetraphenylphosphonium chloride (TPPCl) as catalyst (C), and benzonitrile as solvent (E)*

Under a continuous flow of nitrogen, a glass flask (500 mL) was charged with tetraphenylphosphonium chloride (TPPCl, 0.8834 g) and benzonitrile (92 mL). Subsequently, the mixture was heated to 175°C and stirred for 15 min. A glass bottle (250 mL) was charged with methylene diphenyl diisocyanate (MDI) (28.3134 g), Bisphenol A glycidyl ether (40.1173 g), and benzonitrile (79 mL). The monomer solution was added slowly to the catalyst solution within 90 min. After the addition was finished, the reaction was stirred at 175°C for another 210 min. The completion of the reaction was confirmed by the absence of the isocyanate band (2260 cm$^{-1}$) in the IR spectrum of the reaction mixture. Subsequently, the clear reaction solution was allowed to cool down to ambient temperature. The precipitation of the polymer was performed in ethanol at ambient temperature: Therefore, the product mixture (ca. 50 mL) was added slowly into 200 mL of ethanol and milled with an Ultra-Turrax dispersing instrument from IKA. The product was washed with ethanol, filtered, and dried at ambient temperature overnight. Subsequently, the product was dried under vacuum (50 mbar) at 160°C for 6 h.

Example 10 (comparative): *Reaction of methylene diphenyl diisocyanate (MDI) as diisocyanate (A) with Bisphenol A diglycidyl ether (BADGE) as diepoxide (B), using tetraphenylphosphonium chloride (TPPCl) as catalyst (C), and, o-DCB as solvent (E)*

Under a continuous flow of nitrogen, a glass flask (500 mL) was charged with tetraphenylphosphonium chloride (TPPCl, 0.8834 g) and o-DCB (92 mL). Subsequently, the mixture was heated to 175°C and stirred for 15 min. A glass bottle (250 mL) was charged with methylene diphenyl diisocyanate (MDI) (29.4931 g), Bisphenol A glycidyl ether (38.5141 g), and o-DCB (77 mL). The monomer solution was added slowly to the catalyst solution within 90 min. After the addition was finished, the reaction was stirred at 175°C for another 210 min. The completion of the reaction was confirmed by the absence of the isocyanate band (2260 cm$^{-1}$) in the IR spectrum of the reaction mixture. Subsequently, NMP (107 ml) was added to the reaction mixture and the mixture was allowed to cool down to ambient temperature. The precipitation of the polymer was performed in ethanol at ambient temperature: Therefore, the product mixture (ca. 50 mL) was added slowly into 200 mL of ethanol and milled with an Ultra-Turrax dispersing instrument from IKA. The product was washed with ethanol, filtered, and dried at ambient temperature overnight. Subsequently, the product was dried under vacuum (50 mbar) at 160°C for 6 h.

Example 11: *Reaction of methylene diphenyl diisocyanate (MDI) as diisocyanate (A) with Bisphenol A diglycidyl ether (BADGE) as diepoxide (B), using tetraphenylphosphonium chloride (TPPCl) as catalyst (C), para-tert-butylphenyl glycidyl ether (BPGE) as compound (F), and benzonitrile as solvent (E)*

Under a continuous flow of nitrogen, a glass flask (500 mL) was charged with tetraphenylphosphonium chloride (TPPCl, 0.8834 g) and benzonitrile (92 mL). Subsequently, the mixture was heated to 175°C and stirred for 15 min. A glass bottle (250 mL) was charged with methylene diphenyl diisocyanate (MDI) (29.4931 g), Bisphenol A glycidyl ether (38.5141 g), and benzonitrile (79 mL). The monomer solution was added slowly to the catalyst solution within 90 min. After the addition was finished, the reaction was stirred at 175°C for another 30 min. After a total reaction time of 120 min, para-tert-butylphenyl glycidyl ether (4.8637 g), dissolved in benzonitrile (10 mL), was added to the reaction solution. After the addition the reaction was stirred at 175°C for another 180 min. The completion of the reaction was confirmed by the absence of the isocyanate band (2260 cm$^{-1}$) in the IR spectrum of the reaction mixture. Subsequently, the clear reaction solution was allowed to cool down to ambient temperature. The precipitation of the polymer was performed in ethanol at ambient temperature: Therefore, the product mixture (ca. 50 mL) was added slowly into 200 mL of ethanol and milled with an Ultra-Turrax dispersing instrument from IKA. The product was washed with ethanol, filtered, and dried at ambient temperature overnight. Subsequently, the product was dried under vacuum (50 mbar) at 160°C for 6 h.

Example 12: *Reaction of methylene diphenyl diisocyanate (MDI) as diisocyanate (A) with Bisphenol A diglycidyl ether (BADGE) as diepoxide (B), using tetraphenylphosphonium chloride (TPPCl) as catalyst (C), para-tert-butylphenyl glycidyl ether (BPGE) as compound (F), and, benzonitrile as solvent (E)*

Under a continuous flow of nitrogen, a glass flask (500 mL) was charged with tetraphenylphosphonium chloride (TPPCl, 0.8834 g) and benzonitrile (92 mL). Subsequently, the mixture was heated to 175°C and stirred for 15 min. A glass bottle (250 mL) was charged with methylene diphenyl diisocyanate (MDI) (28.3134 g), Bisphenol A glycidyl ether (40.1173 g), and benzonitrile (79 mL). The monomer solution was added slowly to the catalyst solution within 90 min. After the addition was finished, the reaction was stirred at 175°C for another 30 min. After a total reaction time of 120 min, para-tert-butylphenyl glycidyl ether (4.8637 g), dissolved in benzonitrile (10 mL), was added to the reaction solution. After the addition the reaction was stirred at 175°C for another 180 min. The completion of the reaction was confirmed by the absence of the isocyanate band (2260 cm$^{-1}$) in the IR spectrum of the reaction mixture. Subsequently, the clear reaction solution was allowed to cool down to ambient temperature. The precipitation of the polymer was performed in ethanol at ambient temperature: Therefore, the product mixture (ca. 50 mL) was added slowly into 200 mL of ethanol and milled with an Ultra-Turrax dispersing instrument from IKA. The product was washed with ethanol, filtered, and dried at ambient temperature overnight. Subsequently, the product was dried under vacuum (50 mbar) at 160°C for 6 h.

Example 13: *Reaction of methylene diphenyl diisocyanate (MDI) as diisocyanate (A) with Bisphenol A diglycidyl ether (BADGE) as diepoxide (B), using tetraphenylphosphonium chloride (TPPCl) as catalyst (C), para-tert-butylphenyl glycidyl ether (BPGE) as compound (D) and as compound (F), and benzonitrile as solvent (E)*

Under a continuous flow of nitrogen, a glass flask (500 mL) was charged with tetraphenylphosphonium chloride (TPPCl, 0.8834 g) and benzonitrile (50 mL). Subsequently, the mixture was heated to 175°C and stirred for 15 min. A glass bottle (250 mL) was charged with methylene diphenyl diisocyanate (MDI) (29.4931 g), Bisphenol A glycidyl ether (38.5141 g), *para-tert*-butylphenyl glycidyl ether (1.9449 g), and benzonitrile (40 mL). The monomer solution was added slowly to the catalyst solution within 90 min. After the addition was finished, the reaction was stirred at 175°C for another 30 min. After a total reaction time of 120 min, para-tert-butylphenyl glycidyl ether (4.8637 g), dissolved in benzonitrile (10 mL), was added to the reaction solution. After the addition the reaction was stirred at 175°C for another 180 min. The completion of the reaction was confirmed by the absence of the isocyanate band (2260 cm$^{-1}$) in the IR spectrum of the reaction mixture. Subsequently, the clear reaction solution was allowed to cool down to ambient temperature. The precipitation of the polymer was performed in ethanol at ambient temperature: Therefore, the product mixture (ca. 50 mL) was added slowly into 200 mL of ethanol and milled with an Ultra-Turrax dispersing instrument from IKA. The product was washed with ethanol, filtered, and dried at ambient temperature overnight. Subsequently, the product was dried under vacuum (50 mbar) at 160°C for 6 h.

Example 14: *Reaction of methylene diphenyl diisocyanate (MDI) as diisocyanate (A) with Bisphenol A diglycidyl ether (BADGE) as diepoxide (B), using tetraphenylphosphonium chloride (TPPCl) as catalyst (C), para-tert-butylphenyl glycidyl ether (BPGE) as compound (D) and as compound (F), and benzonitrile as solvent (E)*

Under a continuous flow of nitrogen, a glass flask (500 mL) was charged with tetraphenylphosphonium chloride (TPPCl, 0.8834 g) and benzonitrile (20 mL). Subsequently, the mixture was heated to 175°C and stirred for 15 min. A glass bottle (250 mL) was charged with methylene diphenyl diisocyanate (MDI) (29.4931 g), Bisphenol A glycidyl ether (38.5141 g), *para-tert*-butylphenyl glycidyl ether (1.9449 g), and benzonitrile (33 mL). The monomer solution was added slowly to the catalyst solution within 90 min. After the addition was finished, the reaction was stirred at 175°C for another 30 min. After a total reaction time of 120 min, para-tert-butylphenyl glycidyl ether (4.8637 g), dissolved in benzonitrile (11 mL), was added to the reaction solution. After the addition the reaction was stirred at 175°C for another 180 min. The completion of the reaction was confirmed by the absence of the isocyanate band (2260 cm$^{-1}$) in the IR spectrum of the reaction mixture. Subsequently, the clear reaction solution was allowed to cool down to ambient temperature. The precipitation of the polymer was performed in ethanol at ambient temperature: Therefore, the product mixture (ca. 50 mL) was added slowly into 200 mL of ethanol and milled with an Ultra-Turrax dispersing instrument from IKA. The product was washed with ethanol, filtered, and dried at ambient temperature overnight. Subsequently, the product was dried under vacuum (50 mbar) at 160°C for 6 h.

Example 15: *Reaction of methylene diphenyl diisocyanate (MDI) as diisocyanate (A) with Bisphenol A diglycidyl ether (BADGE) as diepoxide (B), using tetraphenylphosphonium chloride (TPPCl) as catalyst (C), para-tert-butylphenyl glycidyl ether (BPGE) as compound (D) and as compound (F), and benzonitrile as solvent (E)*

Under a continuous flow of nitrogen, a glass flask (500 mL) was charged with tetraphenylphosphonium chloride (TPPCl, 0.8834 g) and benzonitrile (25 mL). Subsequently, the mixture was heated to 175°C and stirred for 15 min. A glass bottle (250 mL) was charged with methylene diphenyl diisocyanate (MDI) (29.4931 g), Bisphenol A glycidyl ether (38.5141 g), *para-tert*-butylphenyl glycidyl ether (1.9449 g), and benzonitrile (15 mL). The monomer solution was added slowly to the catalyst solution within 90 min. After the addition was finished, the reaction was stirred at 175°C for another 30 min. After a total reaction time of 120 min, para-tert-butylphenyl glycidyl ether (4.8637 g) was added to the reaction solution. After the addition the reaction was stirred at 175°C for another 180 min. The completion of the reaction was confirmed by the absence of the isocyanate band (2260 cm$^{-1}$) in the IR spectrum of the reaction mixture. Subsequently, the clear reaction solution was allowed to cool down to ambient temperature. The precipitation of the polymer was performed in ethanol at ambient temperature: Therefore, the product mixture (ca. 50 mL) was added slowly into 200 mL of ethanol and milled with an Ultra-Turrax dispersing instrument from IKA. The product was washed with ethanol, filtered, and dried at ambient temperature overnight. Subsequently, the product was dried under vacuum (50 mbar) at 160°C for 6 h.

Example 16: *Reaction of methylene diphenyl diisocyanate (MDI) as diisocyanate (A) with Bisphenol A diglycidyl ether (BADGE) as diepoxide (B), using tetraphenylphosphonium chloride (TPPCl) as catalyst (C), para-tert-butylphenyl glycidyl ether (BPGE) as compound (D) and as compound (F), and benzonitrile as solvent (E)*

Under a continuous flow of nitrogen, a glass flask (500 mL) was charged with tetraphenylphosphonium chloride (TPPCl, 0.8834 g) and benzonitrile (18 mL). Subsequently, the mixture was heated to 175°C and stirred for 15 min. A glass bottle (250 mL) was charged with methylene diphenyl diisocyanate (MDI) (29.4931 g), Bisphenol A glycidyl ether (38.5141 g), and *para-tert*-butylphenyl glycidyl ether (1.9449 g). The monomer solution was added slowly to the catalyst solution within 90 min. After the addition was finished, the reaction was stirred at 175°C for another 30 min. After a total reaction time of 120 min, para-tert-butylphenyl glycidyl ether (4.8637 g) was added to the reaction solution. After the addition the reaction was stirred at 175°C for another 180 min. The completion of the reaction was confirmed by the absence of the isocyanate band (2260 cm$^{-1}$) in the IR spectrum of the reaction mixture. Subsequently, the clear reaction solution was allowed to cool down to ambient temperature. The precipitation of the polymer was performed in ethanol at ambient temperature: Therefore, the product mixture (ca. 50 mL) was added slowly into 200 mL of ethanol and milled with an Ultra-Turrax dispersing instrument from IKA. The product was washed with ethanol, filtered, and dried at ambient temperature overnight. Subsequently, the product was dried under vacuum (50 mbar) at 160°C for 6 h.

Example 17 (comparative): *Reaction of methylene diphenyl diisocyanate (MDI) as diisocyanate (A) with Bisphenol A diglycidyl ether (BADGE) as diepoxide (B), using tetraphenylphosphonium chloride (TPPCl) as catalyst (C), para-tert-butylphenyl glycidyl ether (BPGE) as compound (D) and as compound (F), and o-DCB as solvent (E)*

Under a continuous flow of nitrogen, a glass flask (500 mL) was charged with tetraphenylphosphonium chloride (TPPCl, 0.8834 g) and o-DCB (31 mL). Subsequently, the mixture was heated to 175°C and stirred for 15 min. A glass bottle (250 mL) was charged with methylene diphenyl diisocyanate (MDI) (29.4931 g), Bisphenol A glycidyl ether (38.5141 g), *para-tert*-butylphenyl glycidyl ether (1.9449 g), and o-DCB (38 mL). The monomer solution was added slowly to the catalyst solution within 90 min. After the addition was finished, the reaction was stirred at 175°C for another 30 min. After a total reaction time of 120 min, para-tert-butylphenyl glycidyl ether (4.8637 g), dissolved in o-DCB (8 mL), was added to the reaction solution. After the addition the reaction was stirred at 175°C for another 180 min. The completion of the reaction was confirmed by the absence of the isocyanate band (2260 cm$^{-1}$) in the IR spectrum of the reaction mixture. Subsequently, NMP (107 ml) was added to homogenize the reaction mixture and the viscous solution was allowed to cool down to ambient temperature. The precipitation of the polymer was performed in ethanol at ambient temperature: Therefore, the product mixture (ca. 50 mL) was added slowly into 200 mL of ethanol and milled with an Ultra-Turrax dispersing instrument from IKA. The product was washed with ethanol, filtered, and dried at ambient temperature overnight. Subsequently, the product was dried under vacuum (50 mbar) at 160°C for 6 h.

Example 18: *Reaction of methylene diphenyl diisocyanate (MDI) as diisocyanate (A) with Bisphenol A diglycidyl ether (BADGE) as diepoxide (B), using tetraphenylphosphonium chloride (TPPCl) as catalyst (C), para-tert-butylphenyl glycidyl ether (BPGE) as compound (D), and benzonitrile as solvent (E)*

Under a continuous flow of nitrogen, a glass flask (500 mL) was charged with tetraphenylphosphonium chloride (TPPCl, 0.4417 g) and benzonitrile (92 mL). Subsequently, the mixture was heated to 175°C and stirred for 15 min. A glass bottle (250 mL) was charged with methylene diphenyl diisocyanate (MDI) (29.4931 g), Bisphenol A glycidyl ether (38.5141 g), *para-tert*-butylphenyl glycidyl ether (1.9449 g), and benzonitrile (79 mL). The monomer solution was added slowly to the catalyst solution within 90 min. After the addition was finished, the reaction was stirred at 175°C for another 210 min. The completion of the reaction was confirmed by the absence of the isocyanate band (2260 cm$^{-1}$) in the IR spectrum of the reaction mixture. Subsequently, the clear reaction solution was allowed to cool down to ambient temperature. The precipitation of the polymer was performed in ethanol at ambient temperature: Therefore, the product mixture (ca. 50 mL) was added slowly into 200 mL of ethanol and milled with an Ultra-Turrax dispersing instrument from IKA. The product was washed with ethanol, filtered, and dried at ambient temperature overnight. Subsequently, the product was dried under vacuum (50 mbar) at 160°C for 6 h.

Example 19: *Reaction of methylene diphenyl diisocyanate (MDI) as diisocyanate (A) with Bisphenol A diglycidyl ether (BADGE) as diepoxide (B), using tetraphenylphosphonium chloride (TPPCl) as catalyst (C), para-tert-butylphenyl glycidyl ether (BPGE) as compound (D), and benzonitrile as solvent (E)*

Under a continuous flow of nitrogen, a glass flask (500 mL) was charged with tetraphenylphosphonium chloride (TPPCl, 0.2209 g) and benzonitrile (92 mL). Subsequently, the mixture was heated to 175°C and stirred for 15 min. A glass bottle (250 mL) was charged with methylene diphenyl diisocyanate (MDI) (29.4931 g), Bisphenol A glycidyl ether (38.5141 g), *para-tert*-butylphenyl glycidyl ether (1.9449 g), and benzonitrile (79 mL). The monomer solution was added slowly to the catalyst solution within 90 min. After the addition was finished, the reaction was stirred at 175°C for another 210 min. The completion of the reaction was confirmed by the absence of the isocyanate band (2260 cm$^{-1}$) in the IR spectrum of the reaction mixture. Subsequently, the clear reaction solution was allowed to cool down to ambient temperature. The precipitation of the polymer was performed in ethanol at ambient temperature: Therefore, the product mixture (ca. 50 mL) was added slowly into 200 mL of ethanol and milled with an Ultra-Turrax dispersing instrument from IKA. The product was washed with ethanol, filtered, and dried at ambient temperature overnight. Subsequently, the product was dried under vacuum (50 mbar) at 160°C for 6 h.

Example 20: *Reaction of methylene diphenyl diisocyanate (MDI) as diisocyanate (A) with Bisphenol A diglycidyl ether (BADGE) as diepoxide (B), using tetraphenylphosphonium chloride (TPPCl) as catalyst (C), para-tert-butylphenyl glycidyl ether (BPGE) as compound (D), and benzonitrile as solvent (E)*

Under a continuous flow of nitrogen, a glass flask (500 mL) was charged with tetraphenylphosphonium chloride (TPPCl, 0.1104 g) and benzonitrile (92 mL). Subsequently, the mixture was heated to 175°C and stirred for 15 min. A glass bottle (250 mL) was charged with methylene diphenyl diisocyanate (MDI) (29.4931 g), Bisphenol A glycidyl ether (38.5141 g), *para-tert*-butylphenyl glycidyl ether (1.9449 g), and benzonitrile (79 mL). The monomer solution was added slowly to the catalyst solution within 90 min. After the addition was finished, the reaction was stirred at 175°C for another 210 min. The completion of the reaction was confirmed by the absence of the isocyanate band (2260 cm$^{-1}$) in the IR spectrum of the reaction mixture. Subsequently, the clear reaction solution was allowed to cool down to ambient temperature. The precipitation of the polymer was performed in ethanol at ambient temperature: Therefore, the product mixture (ca. 50 mL) was added slowly into 200 mL of ethanol and milled with an Ultra-Turrax dispersing instrument from IKA. The product was washed with ethanol, filtered, and dried at ambient temperature overnight. Subsequently, the product was dried under vacuum (50 mbar) at 160°C for 6 h.

Example 21: *Reaction of methylene diphenyl diisocyanate (MDI) as diisocyanate (A) with Bisphenol A diglycidyl ether (BADGE) as diepoxide (B), using tetraphenylphosphonium chloride (TPPCl) as catalyst (C), para-tert-butylphenyl glycidyl ether (BPGE) as compound (D), and benzonitrile as solvent (E)*

Under a continuous flow of nitrogen, a glass flask (500 mL) was charged with tetraphenylphosphonium chloride (TPPCl, 0.2209 g) and benzonitrile (92 mL). Subsequently, the mixture was heated to 190°C and stirred for 15 min. A glass bottle (250 mL) was charged with methylene diphenyl diisocyanate (MDI) (29.4931 g), Bisphenol A glycidyl ether (38.5141 g), *para-tert*-butylphenyl glycidyl ether (1.9449 g), and benzonitrile (79 mL). The monomer solution was added slowly to the catalyst solution within 90 min. After the addition was finished, the reaction was stirred at 190°C for another 210 min. The completion of the reaction was confirmed by the absence of the isocyanate band (2260 cm$^{-1}$) in the IR spectrum of the reaction mixture. Subsequently, the clear reaction solution was allowed to cool down to ambient temperature. The precipitation of the polymer was performed in ethanol at ambient temperature: Therefore, the product mixture (ca. 50 mL) was added slowly into 200 mL of ethanol and milled with an Ultra-Turrax dispersing instrument from IKA. The product was washed with ethanol, filtered, and dried at ambient temperature overnight. Subsequently, the product was dried under vacuum (50 mbar) at 160°C for 6 h.

Example 22(comparative): *Reaction of methylene diphenyl diisocyanate (MDI) as diisocyanate (A) with Bisphenol A diglycidyl ether (BADGE) as diepoxide (B), using tetraphenylphosphonium chloride (TPPCl) as catalyst (C), para-tert-butylphenyl glycidyl ether (BPGE) as compound (D) and as compound (F), and o-DCB as solvent (E)*

Under a continuous flow of nitrogen, a glass flask (500 mL) was charged with tetraphenylphosphonium chloride (TPPCl, 0.2209 g) and ortho-dichlorobenzene (92 mL). Subsequently, the mixture was heated to 175°C and stirred for 15 min. A glass bottle (250 mL) was charged with methylene diphenyl diisocyanate (MDI) (29.4931 g), Bisphenol A glycidyl ether (38.5141 g), *para-tert*-butylphenyl glycidyl ether (1.9449 g), and *ortho*-dichlorobenzene (77 mL). The monomer solution was added slowly to the catalyst solution within 90 min. After the addition was finished, the reaction was stirred at 175°C for another 30 min. After a total reaction time of 120 min, para-tert-butylphenyl glycidyl ether (4.8637 g), dissolved in *ortho*-dichlorobenzene (10 mL), was added to the reaction solution. After the addition the reaction was stirred at 175°C for another 180 min. The completion of the reaction was confirmed by the absence of the isocyanate band (2260 $cm^{-1}$) in the IR spectrum of the reaction mixture. Subsequently, NMP (107 ml) was added to homogenize the reaction mixture and the viscous solution was allowed to cool down to ambient temperature. The precipitation of the polymer was performed in ethanol at ambient temperature: Therefore, the product mixture (ca. 50 mL) was added slowly into 200 mL of ethanol and milled with an Ultra-Turrax dispersing instrument from IKA. The product was washed with ethanol, filtered, and dried at ambient temperature overnight. Subsequently, the product was dried under vacuum (50 mbar) at 160°C for 6 h.

Table: Comparison of the results of Examples 1 to 22:

| Ex. | (A) | (B) | (C) | (C) [wt.%] | (D) | (E) | (F) | Polymer cont. [wt%] | Oxa/PIR | $M_n$ [g/mol] | $M_P$ [g/mol] | PDI |
|---|---|---|---|---|---|---|---|---|---|---|---|---|
| 1 (comp) | MDI | BADGE | LiCl | 0.14 | BPGE | o-DCB | BPGE | 20 | 7.1 | 9700 | 30000 | 3.2 |
| 2 (comp) | MDI | BADGE | LiCl | 0.14 | BPGE | o-DCB | BPGE | 21 | - | - | - | - |
| 3 (comp) | MDI | BADGE | TPPCl | 1.25 | BPGE | o-DCB | BPGE | 22 | 5.8 | 9500 | 34000 | 3.6 |
| 4 (comp) | MDI | BADGE | TPPCl | 1.25 | BPGE | o-DCB | - | 24 | 5.7 | 10700 | 41000 | 4.9 |
| 5 | MDI | BADGE | TPPCl | 1.25 | BPGE | Benzonitrile | BPGE | 27 | 15.5 | 8400 | 28000 | 3.3 |
| 6 | MDI | BADGE | TPPCl | 1.25 | BPGE | Benzonitrile | - | 29 | 13.9 | 9800 | 30000 | 3.1 |
| 7[a] | MDI | BADGE | TPPCl | 1.25 | BPGE | Benzonitrile | - | 29 | 12.7 | 9300 | 31000 | 3.4 |
| 8 | MDI | BADGE | TPPCl | 1.28 | - | Benzonitrile | - | 29 | 13.4 | 15900 | 111000 | 7.1 |
| 9 | MDI | BADGE | TPPCl | 1.28 | - | Benzonitrile | - | 29 | 13.4 | 10300 | 58000 | 5.7 |
| 10 (comp) | MDI | BADGE | TPPCl | 1.28 | - | o-DCB | - | 22 | 5.1 | 6900 | 60000 | 14.1 |
| 11 | MDI | BADGE | TPPCl | 1.25 | - | Benzonitrile | BPGE | 27 | 13.5 | 11500 | 69000 | 6.8 |
| 12 | MDI | BADGE | TPPCl | 1.25 | - | Benzonitrile | BPGE | 27 | 15.1 | 9200 | 58000 | 5.9 |
| 13 | MDI | BADGE | TPPCl | 1.25 | BPGE | Benzonitrile | BPGE | 40 | 13.6 | 8800 | 31000 | 3.6 |
| 14 | MDI | BADGE | TPPCl | 1.25 | BPGE | Benzonitrile | BPGE | 50 | 13.2 | 7700 | 28000 | 3.6 |
| 15 | MDI | BADGE | TPPCl | 1.25 | BPGE | Benzonitrile | BPGE | 60 | 10.0 | 7500 | 24000 | 3.2 |
| 16 | MDI | BADGE | TPPCl | 1.25 | BPGE | Benzonitrile | BPGE | 75 | 7.1 | 6700 | 23000 | 3.7 |
| 17 (comp) | MDI | BADGE | TPPCl | 1.25 | BPGE | o-DCB | BPGE | 40 | 5.9 | 8700 | 36000 | 4.3 |
| 18 | MDI | BADGE | TPPCl | 0.63 | BPGE | Benzonitrile | - | 29 | 12.5 | 10400 | 29000 | 3.0 |
| 19 | MDI | BADGE | TPPCl | 0.31 | BPGE | Benzonitrile | - | 29 | 10.4 | 10300 | 27000 | 3.3 |
| 20 | MDI | BADGE | TPPCl | 0.16 | BPGE | Benzonitrile | - | 29 | 7.1 | 9700 | 23000 | 4.7 |
| 21[b] | MDI | BADGE | TPPCl | 0.31 | BPGE | Benzonitrile | - | 29 | 14.5 | 10900 | 30000 | 3.1 |

EP 4 008 736 A1

(continued)

| Ex. | (A) | (B) | (C) | (C) [wt.%] | (D) | (E) | (F) | Polymer cont. [wt%] | Oxa/PIR | $M_n$ [g/mol] | $M_P$ [g/mol] | PDI |
|---|---|---|---|---|---|---|---|---|---|---|---|---|
| 22 (comp) | MDI | BADGE | TPPCl | 0.31 | BPGE | o-DCB | BPGE | 29 | 4.5 | 5900 | 14000 | 3.4 |

Hansen-Solubility-Parameters: o-DCB ($\delta_D$: 19.2 MPa$^{0.5}$. $\delta_P$: 6.3 MPa$^{0.5}$, $\delta_H$: 3.3 MPa$^{0.5}$), benzonitrile: ($\delta_D$: 18.8 MPa$^{0.5}$. $\delta_P$: 12.0 MPa$^{0.5}$. $\delta_H$: 3.3 MPa$^{0.5}$ at 25 °C.

[C] wt.% of compound (C) was calculated based on the theoretical yield of thermoplastic polyoxazolidinone (1).

PDI: Polydispersity index (PDI) defined as ratio of the weight average molecular weight and the number average molecular weight determined by SEC OXA/PIR: The ratio of oxazolidinone to polyisocyanurate was determined via IR-spectroscopy as described in the method description.

[a]: Reaction time was reduced to 120 min. / [b]: Reaction was performed at 190 °C

**Claims**

1. A process for producing a thermoplastic polyoxazolidinone (1) comprising copolymerizing a diisocyanate compound (A) with a bisepoxide compound (B) in the presence of a catalyst (C) in a solvent (E), wherein the solvent (E) is **characterized by** a cohesive energy density $\delta^2$, the cohesive energy density $\delta^2$ being the sum of a component $\delta_D^2$, $\delta_D^2$ being characteristic of dispersion forces between molecules of the solvent (E), a component $\delta_P^2$, $\delta_P^2$ being characteristic of dipolar intermolecular forces between molecules of the solvent (E), and a component $\delta_H^2$, $\delta_H^2$ being characteristic of hydrogen bond forces between molecules of the solvent (E), with:

$$\delta^2 = \delta_D^2 + \delta_P^2 + \delta_H^2;$$

   wherein at 25 °C:

   $\delta_D$ has a value of 18.0 MPa$^{0,5}$ to 20.0 MPa$^{0,5}$,
   $\delta_P$ has a value of 8.0 MPa$^{0,5}$ to 15.0 MPa$^{0,5}$, and
   $\delta_H$ has a value of 2.5 MPa$^{0,5}$ to 9.0 MPa$^{0,5}$.

2. The process according to claim 1, wherein catalyst (C) comprises at least one of a tetraalkylphosphonium halogenide, a tetracycloalkylphosphonium halogenide, a tetraarylphosphonium halogenide, a tetraalkylammonium halogenide, a tetracycloalkylammonium halogenide, and/or a tetraarylammonium halogenide, preferred a tetraalkylphosphonium halogenide, a tetracycloalkylphosphonium halogenide, and a tetraarylphosphonium halogenide.

3. The process according to claim 1 or 2, wherein catalyst (C) is at least one compound selected from the group consisting of tetraphenylphosphonium chloride, tetraphenylphosphonium bromide, tetraphenylphosphonium iodide, bis(triphenylphosphine)iminium chloride, tetraphenylphosphonium nitrate, and tetraphenylphosphonium carbonate, preferable tetraphenylphosphonium chloride, tetraphenylphosphonium bromide and tetraphenylphosphonium iodide.

4. The process according to any one of claims 1 to 3, wherein a compound (D) is added before the copolymerisation, wherein the compound (D) comprises at least one of a monofunctional isocyanate, a monofunctional epoxide, a cyclic carbonate, a monofunctional alcohol, and a monofunctional amine, preferably a monofunctional epoxide.

5. The process according to any one of claims 1 to 4, wherein the solvent (E) is one single solvent.

6. The process according to any one of claims 1 to 6, wherein the solvent (E) comprises at least one of a substituted or unsubstituted alkyl nitrile, a substituted or unsubstituted alkenyl nitrile, a substituted or unsubstituted cycloalkyl nitrile, a substituted or unsubstituted aryl nitrile, a substituted or unsubstituted alkylcycloalkyl nitrile, a substituted or unsubstituted alkylaryl nitrile, a substituted or unsubstituted hetercycloalkyl nitrile, a substituted or unsubstituted heteroalkyl nitrile, and a substituted or unsubstituted heteroaryl nitrile, preferably a substituted or unsubstituted aryl nitrile.

7. The process according to any one of claims 1 to 7, wherein the solvent (E) is one or more compound(s), preferably one compound, and is selected from the group consisting of benzonitrile, p-chlorobenzonitrile, p-bromobenzonitrile, p-tolunitrile, p-methoxybenzonitrile, p-tert. butylbenzonitrile, o-chlorobenzonitrile, o-bromobenzonitrile, o-tolunitrile, o-methoxybenzonitrile, m-chlorobenzonitrile, m-tolunitrile, m-methoxybenzonitrile 2,3-dichlorobenzonitrile, 2,4-dichlorobenzonitrile, 2,5-dichlorobenzonitrile, 2,6-dichlorobenzonitrile, 3,4-dichlorobenzonitrile, butyronitrile, isobutyronitrile, valeronitrile, cyclohexanecarbonitrile, caprinonitrile, and pivalonitrile, preferably benzonitrile.

8. The process according to any one of claims 1 to 7, wherein the solvent (E) consists of benzonitrile.

9. The process according to any one of claims 1 to 8, wherein the copolymerization comprises:

   (i) placing the solvent (E) and the catalyst (C) in a reactor to provide a mixture (i),
   (ii) placing the diisocyanate compound (A), the bisepoxide compound (B) and optionally the compound (D) in a second vessel to provide a mixture (ii), and
   (iii) adding the mixture (ii) to the mixture (i).

**10.** The process according to claim 9, wherein the compound (D) is added in step (ii).

**11.** The process according to claim 9 or 10, wherein step (iii) is performed at a reaction temperature of $\geq 130$ °C to $\leq 280$ °C, preferably at a temperature of $\geq 140$ °C to $\leq 240$ °C, more preferred at a temperature of $\geq 155$ °C to $\leq 210$ °C.

**12.** The process according to any one of claims 1 to 11 wherein the calculated mass ratio of the sum of diisocyanate compound (A) the bisepoxide compound (B) and the compound (D) to the sum of diisocyanate compound (A) the bisepoxide compound (B) the compound (D) and the solvent (E) is from 10 wt-% to 90 wt-%, preferred from 20 wt-% to 85 wt-% and more preferred from 27 wt-% to 80 wt-%.

**13.** A Thermoplastic polyoxazolidinone (1), obtainable by a process according to one of claims 1 to 11, wherein the thermoplastic polyoxazolidinone has a number average molecular weight Mn from $\geq 500$ to $\leq 500'000$ g/mol, more preferred $\geq 1'000$ to $\leq 50'000$ g/mol and even more preferred $\geq 5'000$ to $\leq 25'0000$ g/mol as determined with gel permeation chromatography (GPC), wherein the GPC is performed on an Agilent 1100 Series instrument with *N,N*-dimethylacetamide (DMAC) + LiBr (1.7 g·L$^{-1}$) as the eluent, PSS GRAM analytical columns (1 x 100 Å, 2 x 3000 Å) from PSS, equipped with a refractive index (RI) detector, wherein the column flow rate in all measurements is set to 1 mL·min$^{-1}$, wherein for determining molecular weight, the calibration is performed with poly(styrene) standards (ReadyCal-Kit PS - Mp 370-2520000Da from PSS), and wherein the samples are analysed using PSS WinGPC UniChrom V 8.2 Software.

**14.** A process for producing a thermoplastic polyoxazolidinone (2), wherein the thermoplastic polyoxazolidinone (1) obtainable by a process according to one of claims 1 to 12 is further reacted with a compound (F) forming a thermoplastic polyoxazolidinone (2), wherein compound (F), comprises at least one of a monofunctional isocyanate, a monofunctional epoxide, a cyclic carbonate, a monofunctional alcohol, and a monofunctional amine, preferably a monofunctional epoxide.

**15.** A Thermoplastic polyoxazolidinone (2), obtainable by a process according to claim 14, wherein the thermoplastic polyoxazolidinone has a number average molecular weight Mn from $\geq 500$ to $\leq 500'000$ g/mol, more preferred $\geq 1'000$ to $\leq 50'000$ g/mol and even more preferred $\geq 5'000$ to $\leq 25'0000$ g/mol as determined with gel permeation chromatography (GPC), wherein the GPC is performed on an Agilent 1100 Series instrument with *N,N*-dimethylacetamide (DMAC) + LiBr (1.7 g·L$^{-1}$) as the eluent, PSS GRAM analytical columns (1 x 100 Å, 2 x 3000 Å) from PSS, equipped with a refractive index (RI) detector, wherein the column flow rate in all measurements is set to 1 mL·min$^{-1}$, wherein for determining molecular weight, the calibration is performed with poly(styrene) standards (ReadyCal-Kit PS - Mp 370-2520000Da from PSS), and wherein the samples are analysed using PSS WinGPC UniChrom V 8.2 Software.

**Europäisches Patentamt**
**European Patent Office**
**Office européen des brevets**

# EUROPEAN SEARCH REPORT

Application Number

EP 20 21 1473

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2019/052991 A1 (COVESTRO DEUTSCHLAND AG [DE]) 21 March 2019 (2019-03-21) | 1-6,8-15 | INV. C08G18/003 |
| A | * table 1 * | 7 | |
| | ----- | | |

TECHNICAL FIELDS SEARCHED (IPC)

C08G

The present search report has been drawn up for all claims

| Place of search | Date of completion of the search | Examiner |
|---|---|---|
| Munich | 5 May 2021 | Bergmeier, Martin |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 20 21 1473

This annex lists the patent family members relating to the patent documents cited in the above-mentioned European search report.
The members are as contained in the European Patent Office EDP file on
The European Patent Office is in no way liable for these particulars which are merely given for the purpose of information.

05-05-2021

| Patent document cited in search report | Publication date | Patent family member(s) | Publication date |
|---|---|---|---|
| WO 2019052991 A1 | 21-03-2019 | CN 111094380 A | 01-05-2020 |
| | | EP 3456753 A1 | 20-03-2019 |
| | | EP 3681923 A1 | 22-07-2020 |
| | | JP 2020533472 A | 19-11-2020 |
| | | KR 20200053557 A | 18-05-2020 |
| | | TW 201920328 A | 01-06-2019 |
| | | US 2020385507 A1 | 10-12-2020 |
| | | WO 2019052991 A1 | 21-03-2019 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2019052991 A1
- WO 2019052994 A1
- WO 2020016276 A1
- EP 20165326 A
- EP 20192497 A
- EP 20192499 A
- EP 20192501 A
- WO 9955772 A

**Non-patent literature cited in the description**

- **M. E. DYEN ; D. SWERN.** *Chem. Rev.,* 1967, vol. 67, 197
- The Three Dimensional Solubility Parameter and Solvent Diffusion Coefficient and Their Importance in Surface Coating Formulation. **CHARLES M. HANSEN.** PhD thesis. Danish Technical Press, 1967
- **HANSEN, CHARLES.** Hansen Solubility Parameters: A user's handbook. CRC Press, 2007
- Solubility Parameters. **ZENG W. ; DU Y. ; XUE Y. ; FRISCH H.L.** Physical Properties of Polymers Handbook. Springer, 2007
- **HANSEN, C.** Hansen Solubility Parameters: A User's Handbook. CRC Press, 2012
- Plastics Additives Handbook. Hanser Publishers, 2000